# EUROPEAN PATENT SPECIFICATION

(11) **EP 4 615 248 B1**
(45) Date of publication and mention of the grant of the patent: **08.07.2026**
(21) Application number: 22814377.2
(22) Date of filing: 09.11.2022
(51) Int. Cl.: A23L 2/56, A23L 2/52, A23L 2/58, A23L 2/60, A23L 27/00

(54) **AROMA COMPOSITION FOR CARBONATED BEVERAGES**
AROMAZUSAMMENSETZUNG FÜR KOHLENSÄUREHALTIGE GETRÄNKE
COMPOSITION D'AROMES POUR BOISSONS GAZEUSES

(43) Date of publication of application: 17.09.2025
(73) Proprietor: Symrise AG, 37603 Holzminden Niedersachsen (DE)
(72) Inventor: BALKE, Daniel, 37671 Lüchtringen (DE); WEISSBRODT, Jenny, 37603 Holzminden (DE); SCHUMANN, Tanja, 37691 Derental (DE); MUELLER, Jennifer, 33034 Brakel (DE)
(74) Representative: Eisenführ Speiser
(86) International application number: PCT/EP2022/081242
(87) International publication number: WO 2024/099547

(56) References cited:
- WO-A1-2004/017761
- WO-A1-2021/105183
- US-A1- 2009 252 789
- US-A1- 2016 353 794
- US-A1- 2018 027 855
- BUFFO R A ET AL: "Effects of agglomeration on the properties of spray-dried encapsulated flavours", FLAVOUR AND FRAGRANCE JOURNAL, WILEY, NEW YORK, NY, GB, vol. 17, no. 4, 26 March 2002 (2002-03-26), pages 292 - 299, XP071707580, ISSN: 0882-5734, DOI: 10.1002/FFJ.1098

## Description

The present invention relates to an aroma powder for imparting, modifying and/or enhancing a flavour in a beverage comprising a base composition, agglomerated aroma particles and a composition partially or completely surrounding the agglomerated aroma particles, a method for producing such an aroma powder, an aroma powder obtainable or obtained by such a method, a method for imparting/modifying and/or enhancing a flavour in a beverage, preferably a carbonated beverage and the use of such an aroma composition for imparting/modifying and/or enhancing a flavour in a beverage, preferably a carbonated beverage. Carbonated beverages are produced and sold by a large number of companies covering for example refreshing beverages, energy drinks, alcoholic beverages and non-alcoholic beverages, as well as numerous different tastes.

For producing a beverage in general, either on industrial level or by consumers, typically, water is provided and flavour compositions are added.

Flavour compositions may generally be of various types, e.g. of liquid, solid or highly viscous nature, wherein the flavourings may provide various taste impressions. Solid flavour compositions are the most advantageous type of flavour compositions, since solid flavour compositions have the lowest weight related to the provided flavour. Based on the low weight and based on the solid form, typically a powder form, such solid flavour compositions can be easily transported and stored in large amounts. An example of a powder for the preparation of an instant beverage, which powder is made by spray-drying an emulsion of binder and aroma, is disclosed in WO 2004/017761 A1.

Moreover, in contrast to highly viscous flavour compositions, such as syrups, or liquid flavour compositions, solid flavour compositions are rather easy to handle, when used in methods for producing beverages. Particularly, highly viscous flavour compositions, such as syrups, may be spilled in the production process and are rather difficult to be completely removed from a production apparatus, in case some of the composition is spilled. Similarly, solid flavour compositions are preferred by consumers, since they allow clean handling.

Additionally, solid flavour compositions can be easily portioned, either in the production process or by a supplier, which can thus provide a flavour composition intended for a predetermined amount of beverage. In case of liquid flavour compositions and particularly highly viscous flavour compositions, portions of the flavour composition will always remain in the container the flavour composition is provided in. Thus, the dosage of the flavour composition in the resulting beverage is more accurate when using solid flavour compositions.

However, for producing a carbonated beverage, particular challenges need to be overcome. In case carbonated water or a carbonated beverage base is provided and shall be supplemented with solid flavour compositions, the flavour composition is added to the carbonated water or carbonated beverage base, which causes a distribution of the flavour composition over the surface of the carbonated water or carbonated beverage base. The distribution over the surface provides much contact of the flavour composition with the carbonated water or carbonated beverage base, which causes a high production of foam and/or effervescent effects. Furthermore, the flavour composition does not dissolve properly and/or causes the formation clots, which do not dissolve, sink to the bottom and remain in the produced beverage, which is thus not properly flavoured.

To overcome this deficit, the produced beverage needs to be stirred extensively. Additionally or alternatively, the clots need to be removed by expending much energy. Such measures provide additional steps in the production process, which are generally to be avoided and which require further time and energy during the production process. Furthermore, these measures cause a loss of carbonic acid in the beverage. Thus, the resulting beverage may have lost the refreshing and/or sparkling effect.

Likewise, the described disadvantages of a low dissolution and clot formation are also obtained in high frequency, when solid flavour compositions are added to non-carbonated water or beverage bases.

Thus, to overcome these disadvantages, typically a liquid or highly viscous flavour composition is provided. Such flavour compositions can be added to the water or beverage base. In a next step, the water or beverage base is mixed to dissolve and distribute the flavour composition.

Further approaches include providing non-carbonated water, adding a highly viscous flavour composition, typically a syrup, and subsequently adding carbonated acid. The addition of the carbonated acid typically provides the dissolution and distribution of the flavour composition. However, in these cases, the tools for adding carbonated acid get in contact with the water and the highly viscous flavour composition and thus need to be cleaned afterwards.

However, for the addition of solid flavour compositions to carbonated beverage, the disadvantages described above have not yet been overcome.

Thus, there is a high need to make solid flavour compositions available for flavouring carbonated water or a carbonated beverage base.

Thus, the primary object of the present invention was to provide a solid flavour composition, which overcomes some of or all of the disadvantages described above.

The primary object of the present invention is solved by an aroma powder for imparting, modifying and/or enhancing a flavour in a beverage, preferably a carbonated beverage, the aroma powder comprising
a) one, two, three or more components selected from the group consisting of sugars, sweeteners, acidity regulators, flow additives, vitamins; minerals; herbal supplements; amino acids; fatty acids; fibers; food colorants; artificial colours; turbidity agents; sugar alcohols; prebiotics; probiotics; dried fruit and vegetable concentrates or extracts; food acids, preferably selected from the group consisting of citric acid, tartaric acid, malic acid, acetic acid, lactic acid, glucuronic acid, ascorbic acid; and carbonates, preferably selected from the group consisting of sodium bicarbonate, sodium carbonate, magnesium carbonate,
b) agglomerated aroma particles,
   wherein the d50 of the agglomerated aroma particles is at least 100 µm, preferably at least 125 µm, preferably at least 150 µm, preferably at least 175 µm, preferably at least 200 µm, preferably at least 210 µm, preferably at least 220 µm,
   wherein the agglomerated aroma particles are obtained or obtainable by a method comprising the steps
      (i) producing particles comprising or consisting of one or more aromatic substance(s) and one or more carrier(s) by spray drying in a drying chamber of a spray drying apparatus,
      (ii) spraying the particles with one or more binder(s) selected from the group consisting of single or multiple sugars with reducing groups and sugar alcohols or mixtures thereof, in a fluidized bed which is integrated into the drying chamber, wherein the binder(s) is/are used in total in a concentration of 10 to 30 vol.-%, preferably 10 to 20 vol.-%, in aqueous solution,
   wherein steps (i) and (ii) take place simultaneously and the particles are permanently kept in motion and agglomerated in the drying chamber, and
   preferably wherein the aqueous solution of the binder(s) does not contain any flavourings and/or odorants,
c) a composition, partially or completely surrounding the agglomerated aroma particles, the composition comprising one, two, three or more or all components selected from the group consisting of triacetin; polyethylene glycol; vegetable oils; fruit oils, preferably citrus fruit oils, preferably citric oil; and nonpolar aromatic substances.

It was surprisingly found that an aroma powder according to the invention can be added to carbonated water or a carbonated beverage base without substantive foam formation. Furthermore, the powder sinks from the surface to the bottom and completely dissolves within short time. Thus, a good distribution of the aroma composition is already provided. Additionally, it was found that by using the aroma powder according to the invention, no loss or no significant loss of carbonic acid is obtained.

In contrast, as described above, compositions according to the state of the art produce much foam, cause an effervescent effect and a loss of carbonic acid.

An aroma composition according to the invention and a spray dried composition (comparative example) are compared in Example 2 below.

The term "aroma particles", as used herein, describes particles containing one or more flavourings. Typically, the term "aroma particles", as used herein, describes a granule or a powder.

The term "agglomerated aroma particles", as used herein, describes an agglomerate, preferably a loose agglomerate, of at least two aroma particles. Preferably, the aroma particles of the agglomerated aroma particles are covered by a binder as described herein. The aroma particles of the agglomerated aroma particles are in contact with each other, either directly or through the binder. Thus, the binder usually covers the surface of the respective aroma particles completely or only partially. Typically, the agglomerated aroma particles differ from individual coated particles, which have an "onion structure" in which there is a core that is completely and uniformly covered with one of several layers of binder. Rather, the agglomerated aroma particles have a "grape structure" in which individual particles are bonded together by the binder. Typically, the term "agglomerated aroma particles" describes a porous structure and is therefore readily and rapidly dispersible or soluble in water, which is particularly advantageous for the application of the particles as described herein.

The aroma powder according to the invention comprises agglomerated aroma particles (component b)) and a composition, partially or completely surrounding the aroma particles of the agglomerated aroma particles (component c)). As described above, it is preferred that the aroma particles of the agglomerated aroma particles (component b)) are covered or partially covered with a binder. In this case, the composition (component c)) may cover the aroma particles at such sites where they are not covered by the binder, or may cover the aroma particles in addition to the binder, e.g. the aroma particles are (partially) covered by the binder in a first layer and in a further layer, the (partially) covered aroma particles are further (partially) covered with the composition (component c)), or a mixture of the options described above.

The aroma powder according to the invention is particularly advantageous for producing carbonated beverages, preferably soft drinks. Thus, it is preferred that the aroma in the agglomerated aroma particles is or comprises one, two, three or more or all flavourings selected from fruit flavours, preferably citrus fruit flavours, preferably lemon flavour; herbal flavours; blossom flavours; liquorice flavour; vanilla flavour; cinnamon flavour; and acidic flavours.

Particularly preferably, the aroma in the agglomerated aroma particles is or comprises one, two, three or more or all flavourings selected from almond flavour, apple flavour, apricot flavour, banana flavour, Bergamot flavour, birch beer flavour, blackberry flavour, Brazil nut flavour, butterscotch flavour, caramel flavour, celery flavour, chai flavour, cherry flavour, cinnamon flavour, citron flavour, clementine flavour, coconut flavour, cola flavour, coriander flavour, cranberry flavour, cucumber flavour, elderberry flavour, fig flavour, forest fruit flavour, ginger flavour, ginger ale flavour, ginseng, flavour, gooseberry flavour, grape flavour, grapefruit flavour, guarana flavour, guava flavour, hazelnut flavour, hibiscus flavour, jasmine flavour, kiwi flavour, lavender flavour, lemon flavour, lemongrass flavour, lime flavour, litchi flavour, malt flavour, mango flavour, mate flavour, melon flavour, mint flavour, mulberry flavour, nectarine flavour, orange flavour, papaya flavour, passionfruit flavour, peach flavour, pear flavour, pineapple flavour, plum flavour, pomegranate flavour, raspberry flavour, rose flavour, rosemary flavour, salak flavour, sea-buckthorn flavour, starfruit flavour, strawberry flavour, tamarind flavour, toffee flavour, vanilla flavour, Vimto flavour, and watermelon flavour.

The term "d50", as used herein, describes the particle size distribution and represents the median size of all particles considered. Thus, a d50 of 100 µm typically means that the median size of the particles is 100 µm and that 50 % of the particles of a size other than 100 µm are larger and 50 % are smaller than 100 µm. Generally, it is preferred that the agglomerated aroma particles are as uniform in size as possible and that no larger agglomerates stick out.

The d50 value of agglomerated aroma particles may be measured by laser diffraction, dynamic or static light scattering, dynamic image analysis or sieve analysis.

Preferably, the term "d50 of the agglomerated aroma particles", as used herein, includes the agglomerated aroma particles (component b)) and the composition, partially or completely surrounding the aroma particles of the agglomerated aroma particles (component c)).

Preferably, the agglomerated aroma particles have a flowability in terms of FFC value of 14 or less, preferably 12 or less. Agglomerated aroma particles with flow values of 14 or less or 12 or less, are non-cohesive and preferably have good solubility. This property is particularly advantageous for the dissolution and distribution of the aroma composition in the beverage. Preferably, the agglomerated aroma particles are in a free-flowing non-dusting form. Such particles are easy to dose, easier to process and can be used in a wide variety of applications. In this context, it is preferred that the term "agglomerated aroma particles" includes the agglomerated aroma particles (component b)) and the composition, partially or completely surrounding the aroma particles of the agglomerated aroma particles (component c)).

Preferably, the bulk density of the agglomerated aroma particles is at least 300 g/L, preferably at least 400 g/L. Further preferably, the bulk density of the agglomerated aroma particles is in the range of 200 to 600 g/L, preferably 300 to 500 g/L. A higher bulk density means that the particles have a stable core and thus a higher stability, especially with regard to abrasion. The choice of binder can influence the bulk density, since such binders improve the cohesion of the agglomerated particles and thus their stability. Advantageously, the binders used according to the invention are also those which enable bulk densities as described above. In this context, it is preferred that the term "agglomerated aroma particles" includes the agglomerated aroma particles (component b)) and the composition, partially or completely surrounding the aroma particles of the agglomerated aroma particles (component c)).

Preferably, the dust value of the agglomerated aroma particles is 13 or less, preferably 12 or less, more preferably 10 or less.

Agglomerated aroma particles with dust values of 13 or less, preferably 12 or less, represent particularly stable agglomerates which can advantageously be filled, stored and transported without causing abrasion and dust formation. The choice of binder can influence the dust formation, and it has been shown that the binders to be used in accordance with the invention meet the necessary requirements to maintain the above dust values. Furthermore, the composition partially or completely surrounding the aroma particles of the agglomerated aroma particles (component c)) further influences the dust value of the agglomerated aroma particles. In this context, it is thus preferred that the term "agglomerated aroma particles" includes the agglomerated aroma particles (component b)) and the composition, partially or completely surrounding the aroma particles of the agglomerated aroma particles (component c)).

When producing the agglomerated aroma particles, as described above, it is preferred that the particles are permanently kept in motion and agitated and/or circulated in the drying chamber. This ensures that smaller particles and dust are continuously wetted with binder and are then very likely to collide with other particles and agglomerate further. Individual particles coated with binder are not generated in the process due to the frequent collision of particles wetted with binder, but agglomerates, preferably loose agglomerates, with a porous structure are formed. Advantageously, the process according to the invention can be carried out in a spray drying chamber with an integrated fluidized bed without the need for transfer to another device. Ways of separating such particles agglomerated to the desired size, as well as effective wetting with binder and circulation of the particles are described in EP3117720A1. Preferably, the process according to the invention is carried out in a spray drying agglomeration apparatus as disclosed in EP3117720A1. A method for producing agglomerated aroma particles has been described in PCT/EP2020/083317.

The term "wherein the binder(s) is/are used in total in a concentration of 10 to 30 vol.-% in aqueous solution", as used above, is to be understood such that the binder used in step (ii) is prepared as an aqueous solution and the amount is calculated based on the amount of the spray emulsion, which is sprayed in the spray drying step for producing particles in step (i). Preferably, the amount of dry mass of the binder is in a range of from 10 to 30 wt.-%, preferably in a range of from 10 to 20 wt.-%, based on the amount of the spray emulsion, which is sprayed in the spray drying step for producing particles in step (i). For example, for every 100 liters of the spray emulsion sprayed in step (i), 10 l of binder (i.e. 10 vol.-%) is sprayed in step (ii), or in terms of solids: for every 50 kg of solids from the spray emulsion in step (i), 1 kg of binder dry mass (i.e. 20 wt.-%) is sprayed.

The binder may be selected from single or multiple sugars with reducing groups and sugar alcohols or mixtures thereof. Single or multiple sugars with reducing groups include mono-, di-, oligo- and polysaccharides. The monosaccharides and polysaccharides to be used according to the invention contain reducing groups, i. e. free aldehyde groups with reducing properties. Preferably, the monosaccharides or polysaccharides with reducing groups or the mixtures thereof have a dextrose equivalent of at least 8, preferably at least 12, particularly preferably at least 18. A combination of vegetable gum and modified starch is a preferred binder.

The term "wherein the aqueous solution of the binder(s) does not contain any flavourings and/or odorants", as used herein, is meant to be understood such that the aqueous solution does not contain any flavourings and/or odorants, in addition to the binder, particularly compounds to be used as binder, as described herein, in case the binder or a compound thereof may be interpreted as a flavouring and/or odorant.

In case the binder itself does not contain any flavourings and/or odorants, usually the flavourings in the aroma particles are not uniformly distributed over the agglomerate formed by the agglomerated aroma particles and are hardly present on the surface. As a result, they are effectively protected from oxidation by the binder and/or composition (component c)). This is remarkable, in case the binder and/or the composition (component c)) does not form a closed layer on the surface of the particles, but merely glues them together. Surprisingly, however, the presence of reducing groups on the surface, as described herein, is sufficient to protect the flavourings and/or odorants from oxidation.

The composition, partially or completely surrounding the aroma particles of the agglomerated aroma particles (component c)) is preferably added to the agglomerated aroma particles as a liquid or a semi-solid composition. The composition is brought in contact with the agglomerated aroma particles and the further components provided, as described herein, followed by a mixing step. The further components, as described herein, can be (partially) present as fine particles or dusts, which typically provide high production of foam under contact with water, which however shall be avoided. Advantageously, the composition then serves as a "glue", which further agglomerates the particles with each other, and particularly binds the further components to the agglomerates. Thus, even in case the composition is added in liquid or semi-solid form, after the mixing, a powder is obtained.

Preferably, the amount of the composition, partially or completely surrounding the aroma particles of the agglomerated aroma particles (component c)) is in a range of from 0.005 to 2.5 wt.-%, preferably in a range of from 0.01 to 2 wt.-%, preferably in a range of from 0.05 to 1.5 wt.-%, preferably in a range of from 0.075 to 1 wt.-%, preferably in a range of from 0.1 to 0.5 wt.-%, based on the aroma powder.

It was surprisingly found that the composition, partially or completely surrounding the aroma particles of the agglomerated aroma particles (component c)) provides particular advantages for reducing or preventing the formation of foam when the aroma powder according to the invention is added to carbonated water or a carbonated beverage base.

It is preferred that component a) is present in solid form.

It is preferred that the d50 of the agglomerated aroma particles in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm.

It was found that the d50 of the agglomerated particles needs to be in a particular range. If the d50 is too low, the applied aroma powder will not sink from the surface to the bottom and will thus provide a particularly increased foam production. If the d50 is too high, the applied aroma powder will sink from the surface to the bottom, but will not distribute evenly and there is a high risk of clot formation.

It is further preferred that the amount of the agglomerated aroma particles in the aroma powder is in a range of from 10 to 40 wt.-%, preferably 15 to 35 wt.-%, preferably 20 to 30 wt.-%, based on the total weight of the aroma powder,
and/or that the combined amount of the agglomerated aroma particles and the composition partially or completely surrounding the aroma particles of the agglomerated aroma particles in the aroma powder is in a range of from 10 to 40 wt.-%, preferably 15 to 35 wt.-%, preferably 20 to 30 wt.-%, based on the total weight of the aroma powder.

Further, it is preferred in the aroma powder according to the invention that the agglomerated aroma particles comprise or consist of one or more flavouring(s) and one or two or all substances selected from binders, carriers, and emulsifiers,
preferably wherein the agglomerated aroma particles comprise or consist of
- 2 to 35 wt.-%, preferably 15 to 25 wt.-% of one or more flavouring(s), based on the total weight of the agglomerated aroma particles,
- 65 to 98 wt.-% of one or two or all substances selected from binders, carriers, and emulsifiers, based on the total weight of the agglomerated aroma particles,
   preferably 1 to 10 wt.-% binders, based on the total weight of the agglomerated aroma particles.

The term "1 to 10 wt.-% binders" as used above, is to be read in context of the 65 to 98 wt.-% of one or two or all substances selected from binders, carriers, and emulsifiers, as described above. Thus, it is preferred that the amount of one or two or all substances selected from binders, carriers, and emulsifiers is in a range of from 65 to 98 wt.-%, wherein preferably the particular amount of the binders is 1 to 10 wt.-% and in this case, 55 to 97 wt.-% (i.e. the remainder of the 65 to 98 wt.-%) are carriers, and emulsifiers, provided that the sum of binders, carriers and emulsifiers equals the 65 to 98 wt.-% described above.

Preferably, the, one or more or all binder(s) is/are selected from the group consisting of sugar alcohols, in particular mannitol, mono-, di- and oligosaccharides with reducing groups or mixtures containing or consisting of mono-, di- and/or oligosaccharides with reducing groups, in particular glucose, mannose, galactose, maltose, lactose, cellobiose, and maltodextrin, and polysaccharides with reducing groups, preferably vegetable gums, in particular gum arabic, traganth, gum ghatti, agar, carrageenan, guar flour and carubin, and mixtures thereof.

Preferably, the, one or more or all carrier(s) is/are selected from the group consisting of maltodextrins, dextrins, starches, flours and fibrous materials, and mixtures thereof.

Preferably, the, one or more or all emulsifier(s) is/are selected from the group consisting of gum arabic, modified starches, proteins, in particular vegetable proteins, native or modified pectins and soluble fractions of soy polysaccharides and mixtures thereof.

The present invention further relates to a method for producing an aroma powder, pr.eferably an aroma powder according to the invention, the method comprising the steps.
i) providing one, two, three or more components selected from the group consisting of sugars, sweeteners, acidity regulators, flow additives, vitamins; minerals; herbal supplements; amino acids; fatty acids; fibers; food colorants; artificial colours; turbidity agents; sugar alcohols; prebiotics; probiotics; dried fruit and vegetable concentrates or extracts; food acids, preferably selected from the group consisting of citric acid, tartaric acid, malic acid, acetic acid, lactic acid, glucuronic acid, ascorbic acid; and carbonates, preferably selected from the group consisting of sodium bicarbonate, sodium carbonate, magnesium carbonate,
   and mixing the provided components until a homogeneous base mixture is obtained,
ii) providing agglomerated aroma particles, wherein the d50 of the agglomerated aroma particles in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm,
iii) adding the agglomerated aroma particles provided in step ii) to the homogeneous base mixture obtained in step i) and mixing the composition until a homogeneous aroma mixture is obtained,
iv) providing a liquid composition comprising one or two or all compounds selected from the group consisting of triacetin; polyethylene glycol; vegetable oils; fruit oils, preferably citrus fruit oils, preferably citric oil; and nonpolar aromatic substances,
   optionally wherein the liquid composition further comprises one or more aroma substance(s).
v) injecting the liquid composition provided in step iv) to the aroma mixture obtained in step iii) and mixing the obtained composition, to provide further agglomeration of the aroma particles,
   or
providing further agglomeration of the aroma particles by spray agglomeration, preferably fluidized bed spray agglomeration, wherein the liquid composition provided in step iv) is sprayed onto the aroma mixture obtained in step iii), preferably the agglomerated aroma particles obtained in step iii), preferably wherein the spray agglomeration further includes a drying step.

What was said above with regard to the aroma powder according to the invention, applies accordingly to the method according to the invention, particularly with regard to the preferred features.

As described above, the liquid composition provided in step iv) and injected in step v) serves as a "glue", which further agglomerates the particles with each other, and particularly binds the further components, particularly those provided in step i), which can be (partially) present as fine particles or dusts, to the agglomerates. Thus, such fine particles or dusts, which typically provide high production of foam under contact with water, can be reduced or even avoided in the obtained aroma powder.

Furthermore, it is particularly advantageous that steps iv) and v) are performed after steps i) to iii), since during mixing processes, typically fine particles or dusts are produced due to mechanical forces.

Agglomerated aroma particles in step ii) of the method according to the invention may be provided as described herein. Particularly, agglomerated aroma particles may be provided as described in PCT/EP2020/083317.

It is thus preferred that in step ii) of the method according to the invention, the agglomerated aroma particles are provided by a method comprising the steps
(ii.a) producing particles comprising or consisting of one or more aromatic substance(s) and one or more carrier(s) by spray drying in a drying chamber of a spray drying apparatus,
(ii.b) spraying the particles with one or more binder(s) selected from the group consisting of single or multiple sugars with reducing groups and sugar alcohols or mixtures thereof, in a fluidized bed which is integrated into the drying chamber, wherein the binder(s) is/are used in total in a concentration of 10 to 30 vol.-%, preferably 10 to 20 vol.-%, in aqueous solution,
   wherein steps (ii.a) and (ii.b) take place simultaneously and the particles are permanently kept in motion and agglomerated in the drying chamber, and
   preferably wherein the aqueous solution of the binder(s) does not contain any flavourings and/or odorants.

When providing the agglomerated aroma particles, as described above, it is preferred that the particles are permanently kept in motion and agitated and/or circulated in the drying chamber. This ensures that smaller particles and dust are continuously wetted with binder and are then very likely to collide with other particles and agglomerate further. Individual particles coated with binder are not generated in the process due to the frequent collision of particles wetted with binder, but agglomerates, preferably loose agglomerates, with a porous structure are formed. Advantageously, the process according to the invention can be carried out in a spray drying chamber with an integrated fluidized bed without the need for transfer to another device. Ways of separating such particles agglomerated to the desired size, as well as effective wetting with binder and circulation of the particles are described in EP3117720A1. Preferably, the process according to the invention is carried out in a spray drying agglomeration apparatus as disclosed in EP3117720A1. A method for producing agglomerated aroma particles has been described in PCT/EP2020/083317.

The term "wherein the binder(s) is/are used in total in a concentration of 10 to 30 vol.-% in aqueous solution", as used above, is to be understood such that the binder used in step (ii) is prepared as an aqueous solution and the amount is calculated based on the amount of the spray emulsion, which is sprayed in the spray drying step for producing particles in step (i). Preferably, the amount of dry mass of the binder is in a range of from 10 to 30 wt.-%, preferably in a range of from 10 to 20 wt.-%, based on the amount of the spray emulsion, which is sprayed in the spray drying step for producing particles in step (i). For example, for every 100 liters of the spray emulsion sprayed in step (i), 10 l of binder (i.e. 10 vol.-%) is sprayed in step (ii), or in terms of solids: for every 50 kg of solids from the spray emulsion in step (i), 1 kg of binder dry mass (i.e. 20 wt.-%) is sprayed.

The binder may be selected from single or multiple sugars with reducing groups and sugar alcohols or mixtures thereof. Single or multiple sugars with reducing groups include mono-, di-, oligo- and polysaccharides. The monosaccharides and polysaccharides to be used according to the invention contain reducing groups, i.e. free aldehyde groups with reducing properties. Preferably, the monosaccharides or polysaccharides with reducing groups or the mixtures thereof have a dextrose equivalent of at least 8, preferably at least 12, particularly preferably at least 18. A combination of vegetable gum and modified starch is a preferred binder.

The term "wherein the aqueous solution of the binder(s) does not contain any flavourings and/or odorants", as used herein, is meant to be understood such that the aqueous solution does not contain any flavourings and/or odorants, in addition to the binder, particularly compounds to be used as binder, as described herein, in case the binder or a compound thereof may be interpreted as a flavouring and/or odorant.

In case the binder itself does not contain any flavourings and/or odorants, usually the flavourings in the aroma particles are not uniformly distributed over the agglomerate formed by the agglomerated aroma particles and are hardly present on the surface. As a result, they are effectively protected from oxidation by the binder and/or composition (component c)). This is remarkable, in case the binder and/or the composition (component c)) does not form a closed layer on the surface of the particles, but merely glues them together. Surprisingly, however, the presence of reducing groups on the surface, as described herein, is sufficient to protect the flavourings and/or odorants from oxidation.

The composition provided in step iv) of the method according to the invention is preferably a liquid or a semi-solid composition. The composition is brought in contact with the agglomerated aroma particles and followed by a mixing step, as described in the next steps of the method according to the invention. The composition then serves as a "glue", which further agglomerates the particles. Thus, even in case the composition is added in liquid or semi-solid form, after the mixing, a powder is obtained. A drying step may thus be performed, but is not mandatory.

The invention further relates to an aroma powder, preferably an aroma powder according to the invention as described above, obtainable or obtained by a method according to the invention.

What was said above with regard to the aroma powder according to the invention applies accordingly to the aroma powder according to the invention obtainable or obtained by a method according to the invention, particularly with regard to the preferred features.

As described above, it is advantageous that during the method according to the invention, the liquid composition is provided and injected. Consequently, the amounts of fine particles or dusts is reduced or may be even avoided.

It is preferred for the aroma powder according to the invention obtainable or obtained by a method according to the invention that the d50 of the agglomerated aroma particles is at least 100 µm, preferably at least 125 µm, preferably at least 150 µm, preferably at least 175 µm, preferably at least 200 µm, preferably at least 210 µm, preferably at least 220 µm.

It is further preferred for the aroma powder according to the invention obtainable or obtained by a method according to the invention that the d50 of the agglomerated aroma particles is in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm.

Furthermore, it is preferred that the amount of the agglomerated aroma particles in the aroma powder is in a range of from 10 to 40 wt.-%, preferably 15 to 35 wt.-%, preferably 20 to 30 wt.-%, based on the total weight of the aroma powder,

and/or that the combined amount of the agglomerated aroma particles and the composition partially or completely surrounding the aroma particles of the agglomerated aroma particles in the aroma powder is in a range of from 10 to 40 wt.-%, preferably 15 to 35 wt.-%, preferably 20 to 30 wt.-%, based on the total weight of the aroma powder.

The invention further relates to a method for imparting, modifying and/or enhancing a flavour in a beverage, preferably a carbonated beverage,
the method comprising the steps
i) providing water, preferably carbonated water,
ii) providing an aroma powder according to the invention,
iii) adding the aroma powder provided in step ii) to the water provided in step i).

It was found that the dissolution of the aroma powder decreases when higher amounts of the aroma powder shall be dissolved in a particular amount of water, preferably carbonated water. Nevertheless, even if decreased, the dissolution was still better than for a composition of the state of the art. Similar results were obtained for the reduced / prevented foam formation.

It is thus preferred that the amount of the aroma powder added in step iii) is in a range of from 0.05 to 25 g/L, preferably 0.1 to 20 g/L, preferably 0.25 to 15 g/L, preferably 0.5 to 12.5 g/L, preferably 1 to 10 g/L, based on the water, preferably carbonated water, provided in step i).

Furthermore, the invention relates to the use of an aroma powder according to the invention for imparting, modifying and/or enhancing a flavour in a beverage, preferably a carbonated beverage.

As described, the dissolution and the foam formation are less advantageous but still superior to compositions of the state of the art, when higher amounts of the aroma powder are used.

It is thus preferred that the use comprises adding aroma powder in a range of from 0.05 to 25 g/L, preferably 0.1 to 20 g/L, preferably 0.25 to 15 g/L, preferably 0.5 to 12.5 g/L, preferably 1 to 10 g/L, based on the water, preferably carbonated water, to the water, preferably carbonated water.

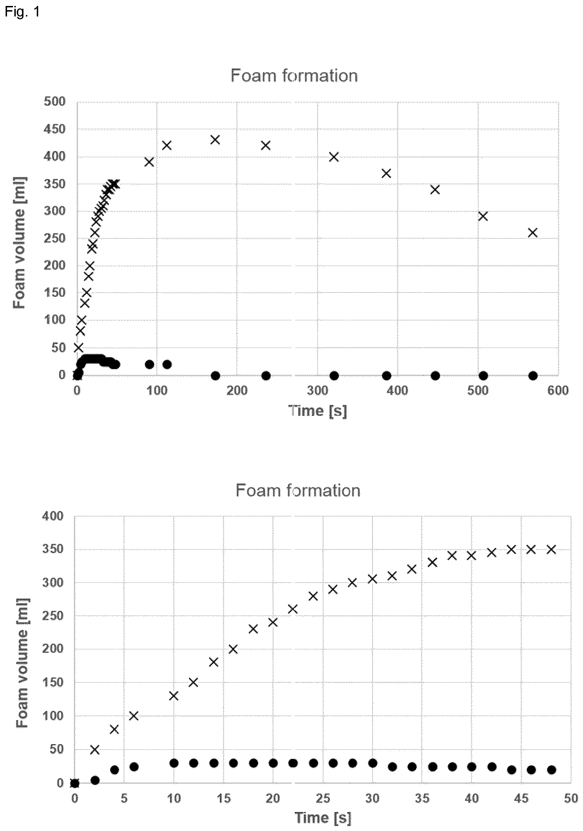

Fig. 1 depicts the plotted results of an analysis of the foam formation according to Example 2, comparing an aroma powder according to the invention (comprising agglomerated aroma particles with d50 = 450 µm; filled dots) with a comparative aroma powder (comprising a spray dried aroma with d50 = 50 µm; comparative example; crosses), showing the results over a time of 10 minutes (upper graph) or, respectively, the first 50 seconds (lower graph).

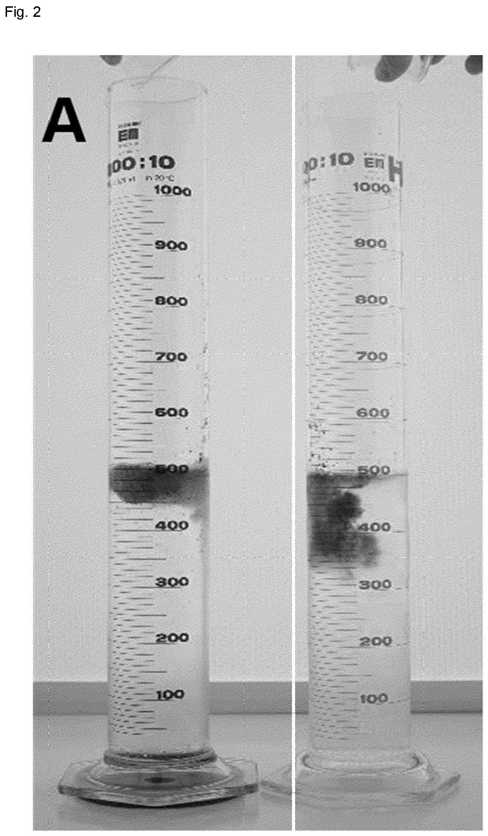

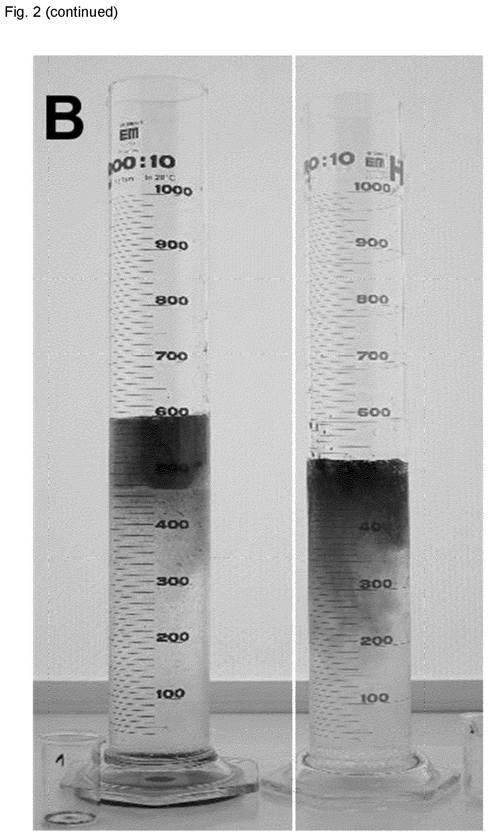

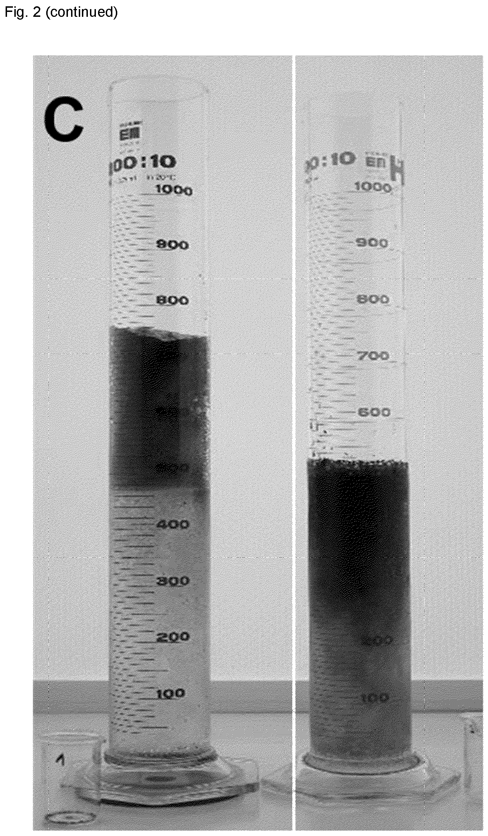

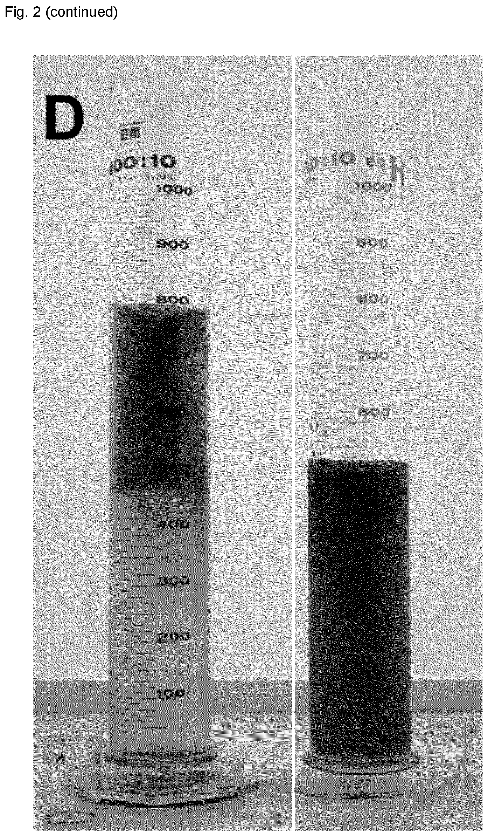

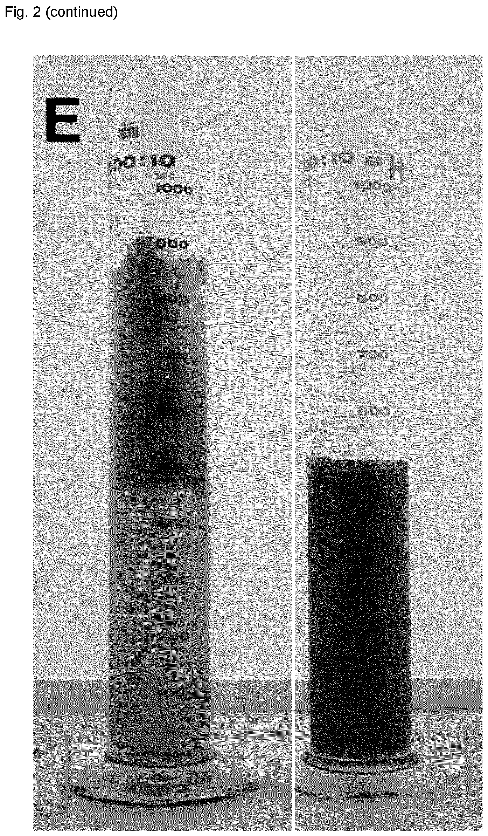

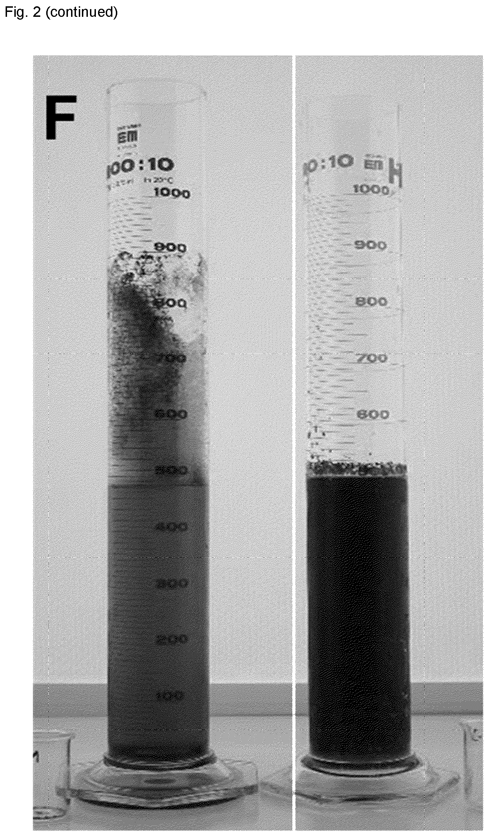

Fig. 2 is a visualisation of the analysis of the foam formation according to Example 2, comparing an aroma powder according to the invention (comprising agglomerated aroma particles with d50 = 450 µm; right cylinder) with a comparative aroma powder (comprising a spray dried aroma with d50 = 50 µm; comparative example; left cylinder), with the results at the time of adding the powders (A), after 10 seconds (B), after 26 seconds (C), after 36 seconds (D), after 112 seconds (E) and after 568 seconds (F).

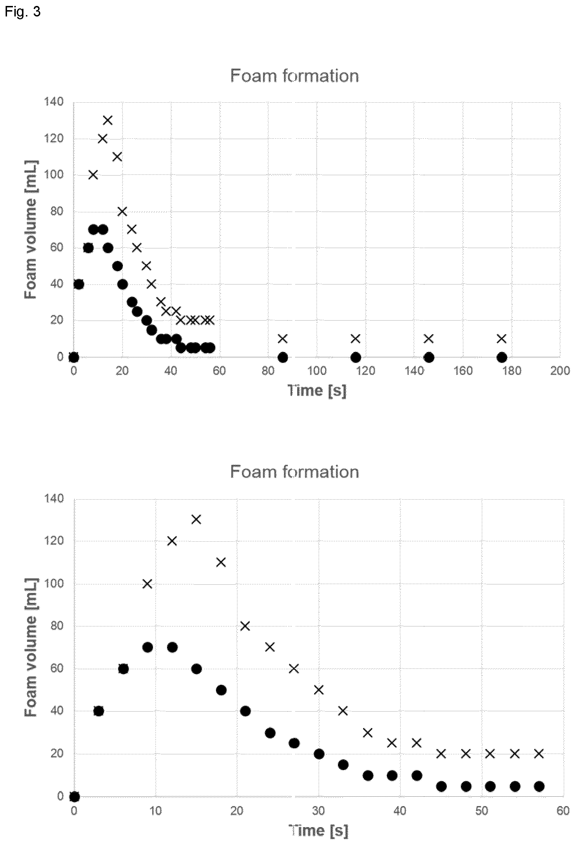

Fig. 3 depicts the plotted results of an analysis of the foam formation according to Example 3, comparing an aroma powder according to the invention (comprising agglomerated aroma particles with d50 = 272.5 µm; filled dots) with a commercial aroma powder (with d50 = 199.5 µm; comparative example; crosses), showing the results over a time of 3 minutes (upper graph) or, respectively, the first 1 minute (lower graph).

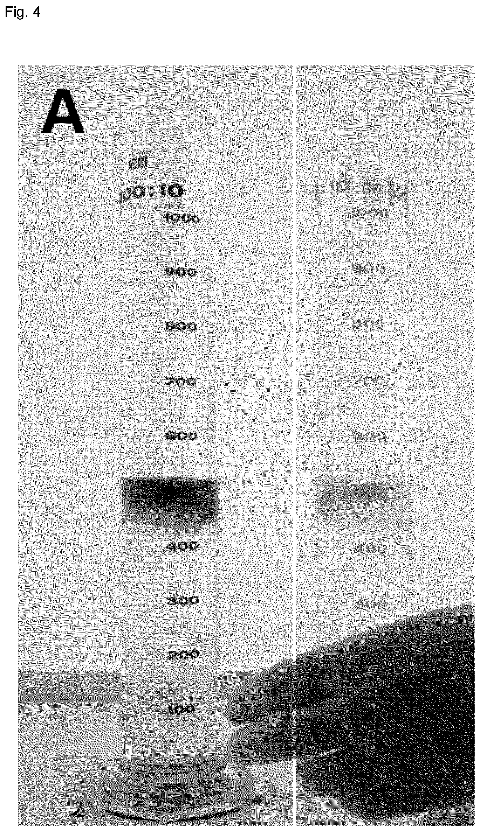

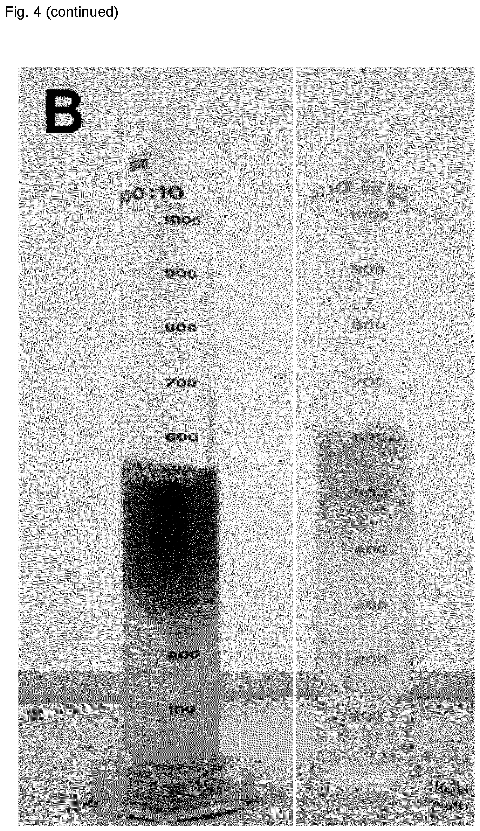

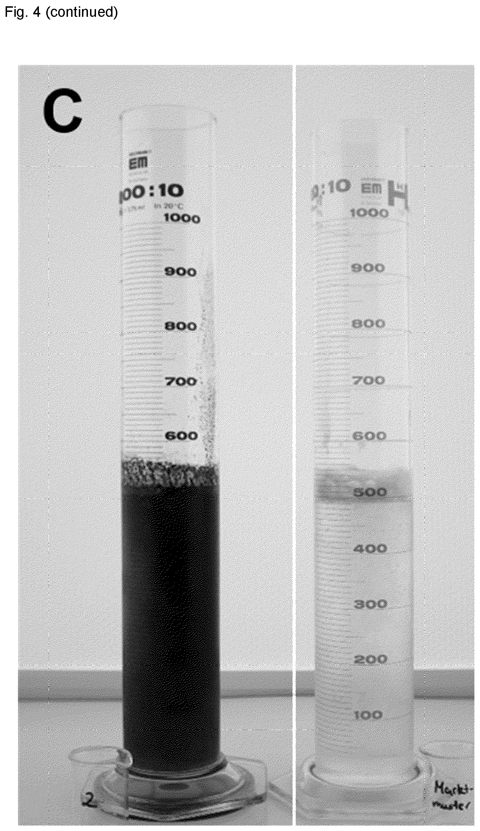

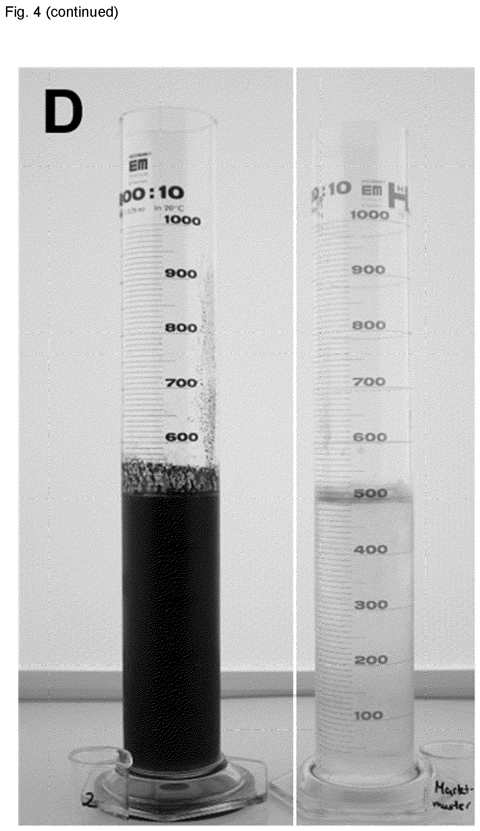

Fig. 4 is a visualisation of the analysis of the foam formation according to Example 3, comparing an aroma powder according to the invention (comprising agglomerated aroma particles with d50 = 272.5 µm; left cylinder) with a commercial aroma powder (with d50 = 199.5 µm; comparative example; right cylinder), with the results 2 seconds after adding the powders (A), after 14 seconds (B), after 26 seconds (C) and after 38 seconds (D).

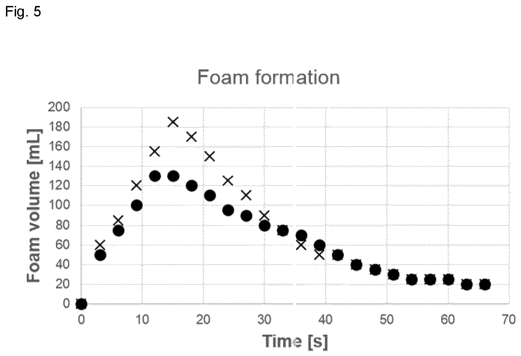

Fig. 5 depicts the plotted results of an analysis of the foam formation according to Example 4, comparing an aroma powder according to the invention (comprising agglomerated aroma particles with d50 = 240.8 µm; crosses) with an aroma powder according to the invention (comprising agglomerated aroma particles with d50 = 272.5 µm; filled dots), showing the results over a time of approximately 1 min.

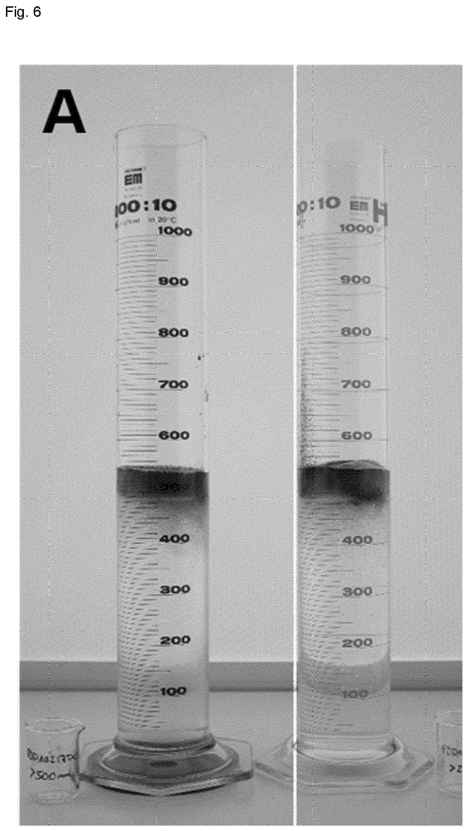

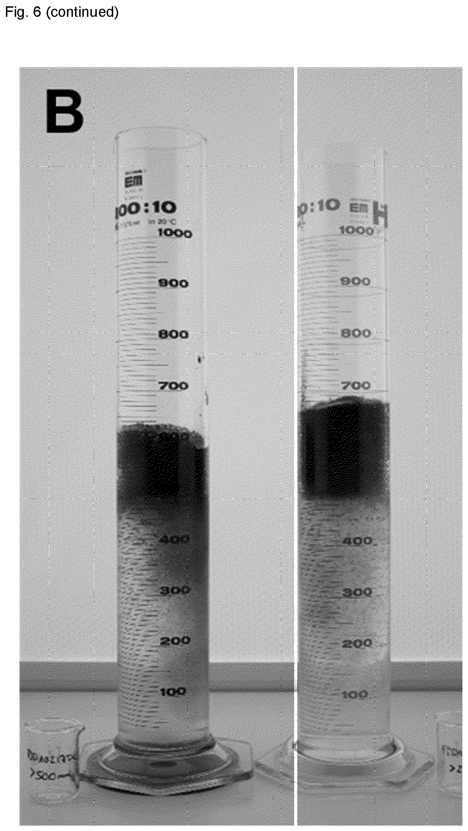

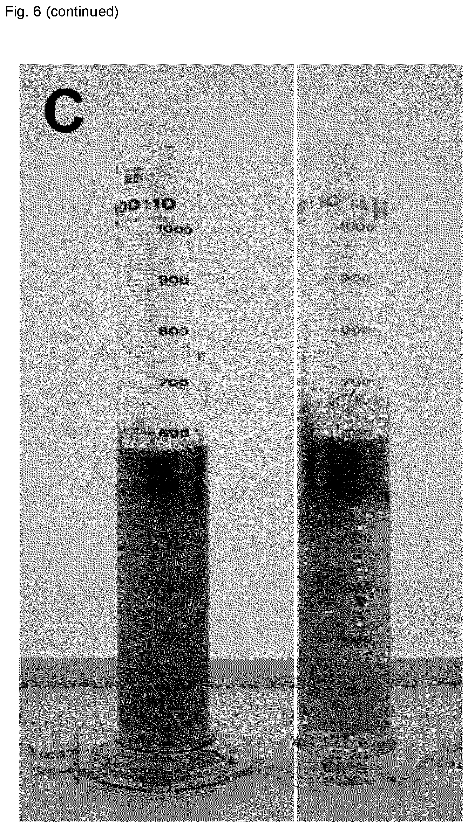

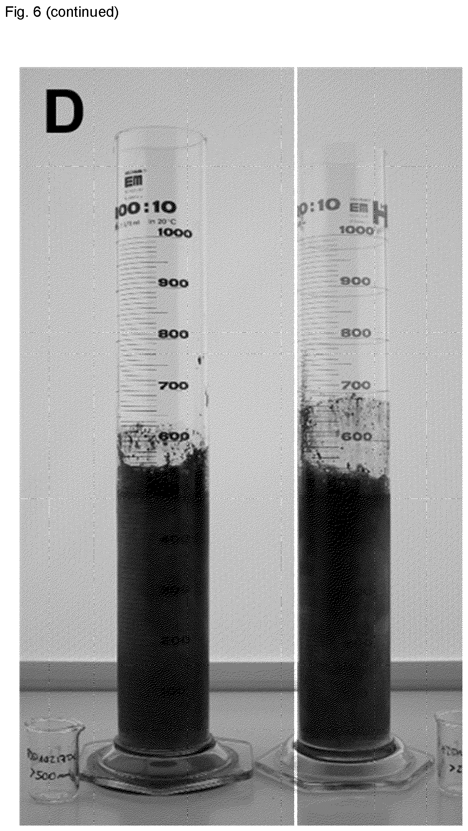

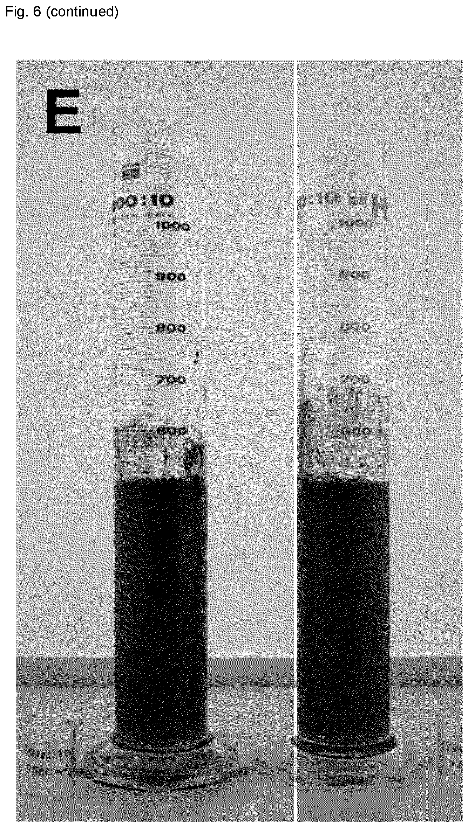

Fig. 6 is a visualisation of the analysis of the foam formation according to Example 4, comparing an aroma powder according to the invention (comprising agglomerated aroma particles with d50 = 240.8 µm; right cylinder) with an aroma powder according to the invention (comprising agglomerated aroma particles with d50 = 272.5 µm; left cylinder), with the results 3 seconds after adding the powders (A), after 15 seconds (B), after 27 seconds (C), after 39 seconds (D), and after 60 seconds (E).

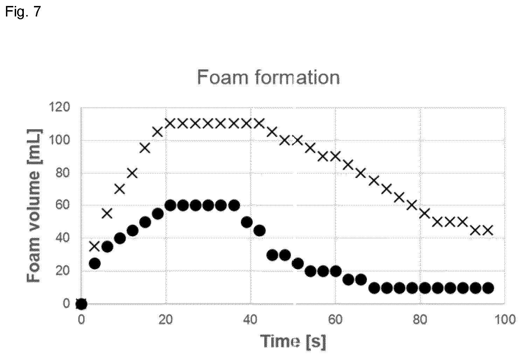

Fig. 7 depicts the plotted results of an analysis of the foam formation according to Example 5, comparing an aroma powder according to the invention (comprising 0.1 wt.-% of the composition; crosses) with an aroma powder according to the invention (comprising 0.3 wt.-% of the composition; filled dots), showing the results over a time of 1.5 minutes.

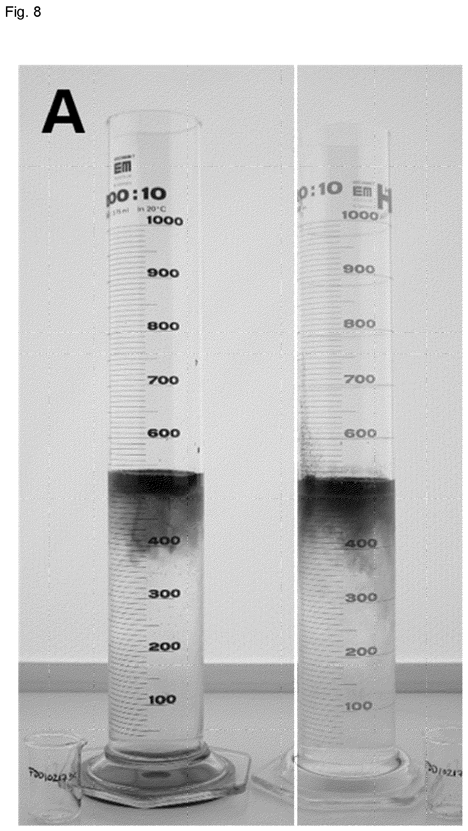

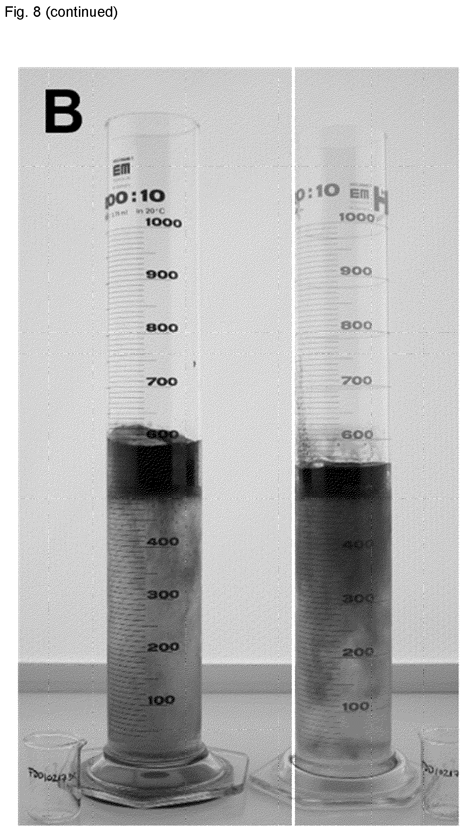

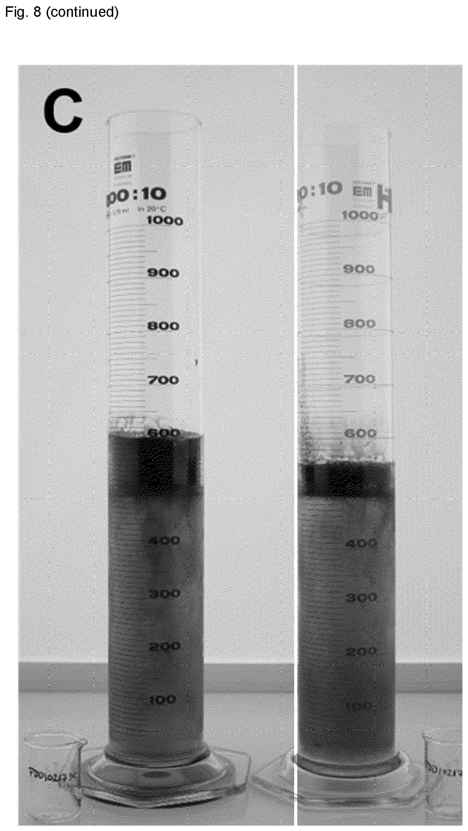

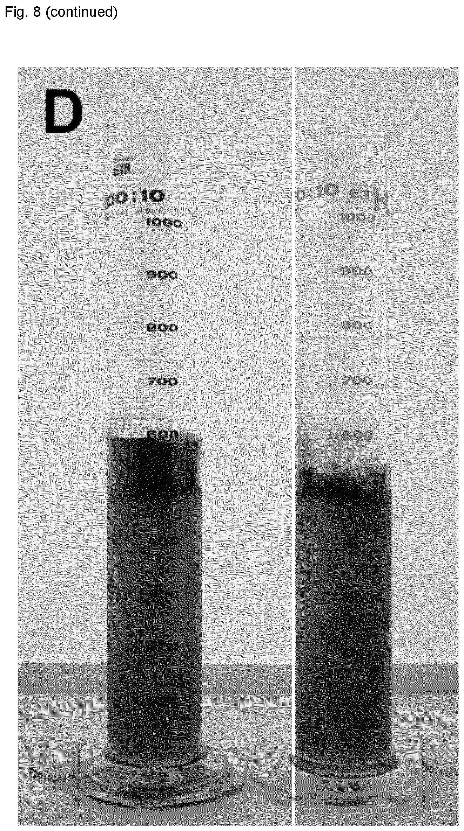

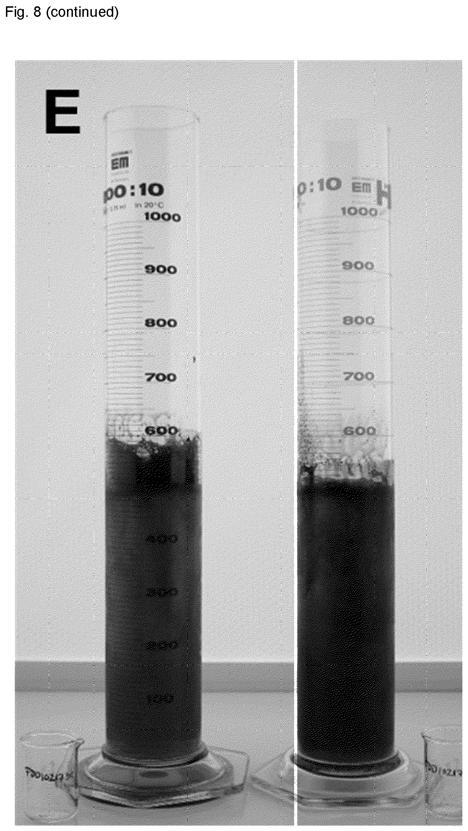

Fig. 8 is a visualisation of the analysis of the foam formation according to Example 5, comparing an aroma powder according to the invention (comprising 0.1 wt.-% of the composition; left cylinder) with an aroma powder according to the invention (comprising 0.3 wt.-% of the composition; right cylinder), with the results 3 seconds after adding the powders (A), after 18 seconds (B), after 33 seconds (C), after 48 seconds (D), and after 63 seconds (E).

Further aspects and advantages of the invention result from the subsequent description of preferred examples.

### Examples

### Example 1: Production of an aroma powder

The following compounds were provided to produce composition 1 (comparative example) and composition 2 (according to the invention).

| **Compounds - List A** | **Composition 1** | **Composition 1** |
|---|---|---|
| Saccharose | 1.7 g | 1.7 g |
| Citric acid | 0.9 g | 0.9 g |
| Sweetener mixture | 0.4 g | 0.4 g |
| Trisodium citrate dihydrate | 0.1 g | 0.1 g |
| Caffeine | 0.08 g | 0.08 g |
| Silicondioxide | 0.01 g | 0.01 g |
| Total amount | 3.19 g | 3.19 g |

| **Compounds - List B** | **Composition 1** | **Composition 2** |
|---|---|---|
| Spray dried cola flavour (d50 = 50 µm) | 1.01 g | --- |
| Agglomerated aroma particles produced according to PCT/EP2020/083317; cola flavour (d50 = 450 µm) | --- | 1.01 g |

The compounds of List A were provided as powders and were mixed. The mixing was performed for 2 min in the chopper until a homogenous mixture was obtained.

The compounds of List B were added to the homogenous mixture obtained above and the obtained compositions were mixed carefully for 1 minute. In case of composition 1, the powder was collected to obtain an aroma powder **(aroma powder 1).**

Only in case of composition 2, 0.01 g triacetin comprising fruit peel oil were provided as liquid composition, which was slowly injected to the mixture obtained above. After mixing for 2 minutes, a powder was obtained **(aroma powder 2).**

### Example 2: Analysis of foam formation and dissolution

Two glass cylinders with identical dimensions were provided and filled with 500 ml carbonated water each.

4.2 g of aroma powder 1, as produced in Example 1, was added to the first glass cylinder and simultaneously, 4.2 g of aroma powder 2, as produced in Example 1, was added to the second glass cylinder. After the addition, it was not interacted with the glass cylinders, i.e. the mixtures were not stirred or otherwise affected.

Pictures of both glass cylinders were taken for 10 min and the amount of produced foam was determined based on the volume units on the glass cylinders.

| Time [s] | Foam volume | |
|---|---|---|
| | Aroma powder 1 [mL] | Aroma powder 2 [mL] |
| 0 | 0 | 0 |
| 2 | 50 | 5 |
| 4 | 80 | 20 |
| 6 | 100 | 25 |
| 10 | 130 | 30 |
| 12 | 150 | 30 |
| 14 | 180 | 30 |
| 16 | 200 | 30 |
| 18 | 230 | 30 |
| 20 | 240 | 30 |
| 22 | 260 | 30 |
| 24 | 280 | 30 |
| 26 | 290 | 30 |
| 28 | 300 | 30 |
| 30 | 305 | 30 |
| 32 | 310 | 25 |
| 34 | 320 | 25 |
| 36 | 330 | 25 |
| 36 | 330 | 25 |
| 38 | 340 | 25 |
| 40 | 340 | 25 |
| 42 | 345 | 25 |
| 44 | 350 | 20 |
| 46 | 350 | 20 |
| 48 | 350 | 20 |
| 90 | 390 | 20 |
| 112 | 420 | 20 |
| 172 | 430 | 0 |
| 236 | 420 | 0 |
| 320 | 400 | 0 |
| 386 | 370 | 0 |
| 446 | 340 | 0 |
| 506 | 290 | 0 |
| 568 | 260 | 0 |

The results of the analysis of the foam formation is plotted in Figs. 1 and 2.

It was clearly demonstrated that the foam formation was significantly reduced in composition 2 (according to the present invention), compared to composition 1 (comparative example).

Likewise, even without stirring the mixtures, composition 2 was sinking and thereby completely and uniformly dissolving over the whole volume of the carbonated water. After less than 2 minutes, a uniform mixture was obtained. No clot formation was observed.

In contrast, even after approximately 10 minutes, no uniform mixture was obtained by composition 1. Furthermore, clot formation was observed, wherein the clots remained at the bottom of the glass cylinder.

### Example 3: Analysis of foam formation and dissolution

Two glass cylinders with identical dimensions were provided and filled with 500 ml carbonated water each.

4.2 g of an aroma powder according to the invention and with a cola flavour was added to the first glass cylinder (aroma powder 3). Simultaneously, 4.2 g of a commercial aroma powder with a lemon flavour was added to the second glass cylinder (aroma powder 4). The d50 of aroma powder 3 was 272.5 µm. The d50 of aroma powder 4 was 199.5 µm. The commercial aroma powder does not contain the composition, partially or completely surrounding the aroma particles.

After the addition, it was not interacted with the glass cylinders, i.e. the mixtures were not stirred or otherwise affected.

Pictures of both glass cylinders were taken for 3 min and the amount of produced foam was determined based on the volume units on the glass cylinders.

| Time [s] | Foam volume | |
|---|---|---|
| | Aroma powder 3 [mL] | Aroma powder 4 [mL] |
| 0 | 0 | 0 |
| 3 | 40 | 40 |
| 6 | 60 | 60 |
| 9 | 70 | 100 |
| 12 | 70 | 120 |
| 15 | 60 | 130 |
| 18 | 50 | 110 |
| 21 | 40 | 80 |
| 24 | 30 | 70 |
| 27 | 25 | 60 |
| 30 | 20 | 50 |
| 33 | 15 | 40 |
| 36 | 10 | 30 |
| 39 | 10 | 25 |
| 42 | 10 | 25 |
| 45 | 5 | 20 |
| 48 | 5 | 20 |
| 51 | 5 | 20 |
| 54 | 5 | 20 |
| 57 | 5 | 20 |
| 86 | 0 | 10 |
| 116 | 0 | 10 |
| 146 | 0 | 10 |
| 176 | 0 | 10 |

The results of the analysis of the foam formation is plotted in Figs. 3 and 4.

It was clearly demonstrated that the foam formation was significantly reduced in composition 3 (according to the present invention), compared to composition 4 (comparative example).

Likewise, even without stirring the mixtures, composition 3 was sinking and thereby completely and uniformly dissolving over the whole volume of the carbonated water. After less than 1 minute, a uniform mixture was obtained. No clot formation was observed.

In contrast, even after approximately 3 minutes, no uniform mixture was obtained by composition 4.

### Example 4: Analysis of different sizes

Two glass cylinders with identical dimensions were provided and filled with 500 ml carbonated water each.

Two aroma powders according to the invention were provided, wherein the two aroma powders had different d50 values. The different d50 values were obtained by sieving the powders with different mesh sizes.

In aroma powder 5, the d50 value was 240.8 µm. In aroma powder 6, the d50 value was 272.5 µm.

4.2 g of aroma powder 5 or 6 were simultaneously added to the first or, respectively, second glass cylinder. After the addition, it was not interacted with the glass cylinders, i.e. the mixtures were not stirred or otherwise affected.

Pictures of both glass cylinders were taken for approximately 1 min and the amount of produced foam was determined based on the volume units on the glass cylinders.

| Time [s] | Foam volume | |
|---|---|---|
| | Aroma powder 5 [mL] | Aroma powder 6 [mL] |
| 0 | 0 | 0 |
| 3 | 60 | 50 |
| 6 | 85 | 75 |
| 9 | 120 | 100 |
| 12 | 155 | 130 |
| 15 | 185 | 130 |
| 18 | 170 | 120 |
| 21 | 150 | 110 |
| 24 | 125 | 95 |
| 27 | 110 | 90 |
| 30 | 90 | 80 |
| 33 | 75 | 75 |
| 36 | 60 | 70 |
| 39 | 50 | 60 |
| 42 | 50 | 50 |
| 45 | 40 | 40 |
| 48 | 35 | 35 |
| 51 | 30 | 30 |
| 54 | 25 | 25 |
| 57 | 25 | 25 |
| 60 | 25 | 25 |
| 63 | 20 | 20 |
| 66 | 20 | 20 |

The results of the analysis of the foam formation is plotted in Figs. 5 and 6.

It was observed that a higher d50 value provided less foam production.

### Example 5: Effect of the composition surrounding the aroma particles

Two glass cylinders with identical dimensions were provided and filled with 500 ml carbonated water each.

Two aroma powders according to the invention were provided, wherein the two aroma powders had different amounts of the composition surrounding the aroma particles.

In aroma powder 7, the composition amounted to 0.1 wt.-%, based on the total weight of the aroma powder. In aroma powder 8, the composition amounted to 0.3 wt.-%, based on the total weight of the aroma powder.

4.2 g of aroma powder 7 or 8 were simultaneously added to the first or, respectively, second glass cylinder. After the addition, it was not interacted with the glass cylinders, i.e. the mixtures were not stirred or otherwise affected.

Pictures of both glass cylinders were taken for 1.5 min and the amount of produced foam was determined based on the volume units on the glass cylinders.

| Time [s] | Foam volume | |
|---|---|---|
| | Aroma powder 7 [mL] | Aroma powder 8 [mL] |
| 0 | 0 | 0 |
| 3 | 35 | 25 |
| 6 | 55 | 35 |
| 9 | 70 | 40 |
| 12 | 80 | 45 |
| 15 | 95 | 50 |
| 18 | 105 | 55 |
| 21 | 110 | 60 |
| 24 | 110 | 60 |
| 27 | 110 | 60 |
| 30 | 110 | 60 |
| 33 | 110 | 60 |
| 36 | 110 | 60 |
| 39 | 110 | 50 |
| 42 | 110 | 45 |
| 45 | 105 | 30 |
| 48 | 100 | 30 |
| 51 | 100 | 25 |
| 54 | 95 | 20 |
| 57 | 90 | 20 |
| 60 | 90 | 20 |
| 63 | 85 | 15 |
| 66 | 80 | 15 |
| 69 | 75 | 10 |
| 72 | 70 | 10 |
| 75 | 65 | 10 |
| 78 | 60 | 10 |
| 81 | 55 | 10 |
| 84 | 50 | 10 |
| 87 | 50 | 10 |
| 90 | 50 | 10 |
| 93 | 45 | 10 |
| 96 | 45 | 10 |

The results of the analysis of the foam formation is plotted in Figs. 7 and 8. It was observed that a higher amount of the composition provided less foam production. It was further observed that the aroma powder with the higher amount of the composition was sinking faster to the bottom and provided a faster dissolution.

## Claims

1. Aroma powder for imparting, modifying and/or enhancing a flavour in a beverage, preferably a carbonated beverage, the aroma powder comprising
a) one, two, three or more components selected from the group consisting of sugars, sweeteners, acidity regulators, flow additives, vitamins; minerals; herbal supplements; amino acids; fatty acids; fibers; food colorants; artificial colours; turbidity agents; sugar alcohols; prebiotics; probiotics; dried fruit and vegetable concentrates or extracts; food acids, preferably selected from the group consisting of citric acid, tartaric acid, malic acid, acetic acid, lactic acid, glucuronic acid, ascorbic acid; and carbonates, preferably selected from the group consisting of sodium bicarbonate, sodium carbonate, magnesium carbonate,
b) agglomerated aroma particles,
wherein the d50 of the agglomerated aroma particles is at least 100 µm,
wherein the agglomerated aroma particles are obtained or obtainable by a method comprising the steps
(i) producing particles comprising or consisting of one or more aromatic substance(s) and one or more carrier(s) by spray drying in a drying chamber of a spray drying apparatus,
(ii) spraying the particles with one or more binder(s) selected from the group consisting of single or multiple sugars with reducing groups and sugar alcohols or mixtures thereof, in a fluidized bed which is integrated into the drying chamber, wherein the amount of the binder is in a range of from 10 to 30 vol.-%, preferably in a range of from 10 to 20 vol.-%, based on the amount of the spray emulsion, which is sprayed in the spray drying step for producing particles in step (i),
wherein steps (i) and (ii) take place simultaneously and the particles are permanently kept in motion and agglomerated in the drying chamber, and
c) a composition, partially or completely surrounding the aroma particles of the agglomerated aroma particles, the composition comprising one, two, three or more or all components selected from the group consisting of triacetin; polyethylene glycol; vegetable oils; fruit oils, preferably citrus fruit oils, preferably citric oil; and nonpolar aromatic substances.

2. Aroma powder according to claim 1, wherein the amount of the agglomerated aroma particles in the aroma powder is in a range of from 10 to 40 wt.-%, preferably 15 to 35 wt.-%, preferably 20 to 30 wt.-%, based on the total weight of the aroma powder,
and/or wherein the combined amount of the agglomerated aroma particles and the composition partially or completely surrounding the aroma particles of the agglomerated aroma particles in the composition is in a range of from 10 to 40 wt.-%, preferably 15 to 35 wt.-%, preferably 20 to 30 wt.-%, based on the total weight of the aroma powder.

3. Aroma powder according to claims 1 or 2, wherein the d50 of the agglomerated aroma particles in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm.

4. Aroma powder according to any one of the previous claims, wherein the agglomerated aroma particles comprise or consist of one or more flavouring(s) and one or two or all substances selected from binders, carriers, and emulsifiers,
preferably wherein the agglomerated aroma particles comprise or consist of
- 2 to 35 wt.-%, preferably 15 to 25 wt.-% of one or more flavouring(s), based on the total weight of the agglomerated aroma particles,
- 65 to 98 wt.-% of one or two or all substances selected from binders, carriers, and emulsifiers, based on the total weight of the agglomerated aroma particles,
preferably 1 to 10 wt.-% binders, based on the total weight of the agglomerated aroma particles.

5. Aroma powder according to claim 4,
wherein the, one or more or all binder(s) is/are selected from the group consisting of sugar alcohols, in particular mannitol, mono-, di- and oligosaccharides with reducing groups or mixtures containing or consisting of mono-, di- and/or oligosaccharides with reducing groups, in particular glucose, mannose, galactose, maltose, lactose, cellobiose, and maltodextrin, and polysaccharides with reducing groups, preferably vegetable gums, in particular gum arabic, traganth, gum ghatti, agar, carrageenan, guar flour and carubin, and mixtures thereof,
and/or
wherein the, one or more or all carrier(s) is/are selected from the group consisting of maltodextrins, dextrins, starches, flours and fibrous materials, and mixtures thereof,
and/or
wherein the, one or more or all emulsifier(s) is/are selected from the group consisting of gum arabic, modified starches, proteins, in particular vegetable proteins, native or modified pectins and soluble fractions of soy polysaccharides, and mixtures thereof.

6. Method for producing an aroma powder, preferably an aroma powder according to any one of the preceding claims, the method comprising the steps
i) providing one, two, three or more components selected from the group consisting of sugars, sweeteners, acidity regulators, flow additives, vitamins; minerals; herbal supplements; amino acids; fatty acids; fibers; food colorants; artificial colours; turbidity agents; sugar alcohols; prebiotics; probiotics; dried fruit and vegetable concentrates or extracts; food acids, preferably selected from the group consisting of citric acid, tartaric acid, malic acid, acetic acid, lactic acid, glucuronic acid, ascorbic acid; and carbonates, preferably selected from the group consisting of sodium bicarbonate, sodium carbonate, magnesium carbonate,
and mixing the provided components until a homogeneous base mixture is obtained,
ii) providing agglomerated aroma particles, wherein the d50 of the agglomerated aroma particles is in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm,
iii) adding the agglomerated aroma particles provided in step ii) to the homogeneous base mixture obtained in step i) and mixing the composition until a homogeneous aroma mixture is obtained,
iv) providing a composition comprising one, two, three or more or all compounds selected from the group consisting of triacetin; polyethylene glycol; vegetable oils; fruit oils, preferably citrus fruit oils, preferably citric oil; and nonpolar aromatic substances,
optionally wherein the liquid composition further comprises one or more aroma substance(s).
v) injecting the liquid composition provided in step iv) to the aroma mixture obtained in step iii) and mixing the obtained composition, to provide further agglomeration of the aroma particles,
or
providing further agglomeration of the aroma particles by spray agglomeration, preferably fluidized bed spray agglomeration, wherein the liquid composition provided in step iv) is sprayed onto the aroma mixture obtained in step iii), preferably the agglomerated aroma particles obtained in step iii), preferably wherein the spray agglomeration further includes a drying step.

7. Method according to claim 6, wherein in step ii) the agglomerated aroma particles are provided by a method comprising the steps
(ii.a) producing particles comprising or consisting of one or more aromatic substance(s) and one or more carrier(s) by spray drying in a drying chamber of a spray drying apparatus,
(ii.b) spraying the particles with one or more binder(s) selected from the group consisting of single or multiple sugars with reducing groups and sugar alcohols or mixtures thereof, in a fluidized bed which is integrated into the drying chamber, wherein the binder(s) is/are used in total in a concentration of 10 to 30 vol.-%, preferably 10 to 20 vol.-%, in aqueous solution,
wherein steps (ii.a) and (ii.b) take place simultaneously and the particles are permanently kept in motion and agglomerated in the drying chamber, and
preferably wherein the aqueous solution of the binder(s) does not contain any flavourings and/or odorants.

8. Aroma powder, preferably an aroma powder according to any one of claims 1 to 5, obtainable or obtained by a method according to any one of claims 6 or 7,
preferably wherein the d50 of the agglomerated aroma particles is at least 100 µm.

9. Aroma powder according to claim 8, wherein the d50 of the agglomerated aroma particles is in a range of from 100 to 1000 µm, preferably in the range of from 125 to 900 µm, preferably in the range of from 150 to 800 µm, preferably in the range of from 175 to 750 µm, preferably in the range of from 200 to 700 µm, preferably in the range of from 210 to 675 µm, preferably in the range of from 220 to 650 µm, preferably in the range of from 250 to 600 µm, preferably in the range of from 300 to 500 µm preferably in the range of from 325 to 375 µm.

10. Aroma powder according to claim 8 or 9, wherein the amount of the agglomerated aroma particles in the aroma powder is in a range of from 10 to 40 wt.-%, preferably 15 to 35 wt.-%, preferably 20 to 30 wt.-%, based on the total weight of the aroma powder,
and/or wherein the combined amount of the agglomerated aroma particles and the composition partially or completely surrounding the aroma particles of the agglomerated aroma particles in the composition is in a range of from 10 to 40 wt.-%, preferably 15 to 35 wt.-%, preferably 20 to 30 wt.-%, based on the total weight of the aroma powder.

11. Method for imparting, modifying and/or enhancing a flavour in a beverage, preferably a carbonated beverage,
the method comprising the steps
i) providing water, preferably carbonated water,
ii) providing an aroma powder according to any one of claims 1 to 5 or 8 to 10,
iii) adding the aroma powder provided in step ii) to the water provided in step i).

12. Method according to claim 11, wherein the aroma powder added in step iii) is in a range of from 0.05 to 25 g/L, preferably 0.1 to 20 g/L, preferably 0.25 to 15 g/L, preferably 0.5 to 12.5 g/L, preferably 1 to 10 g/L, based on the water, preferably carbonated water, provided in step i).

13. Use of an aroma powder according to any one of claims 1 to 5 or 8 to 10 for imparting, modifying and/or enhancing a flavour in a beverage, preferably a carbonated beverage.

14. Use according to claim 13, wherein the use comprises adding aroma powder in a range of from 0.05 to 25 g/L, preferably 0.1 to 20 g/L, preferably 0.25 to 15 g/L, preferably 0.5 to 12.5 g/L, preferably 1 to 10 g/L, based on the water, preferably carbonated water, to the water, preferably carbonated water.

## Patentansprüche

1. Aromapulver zum Vermitteln, Modifizieren und/oder Verstärken eines Geschmacks in einem Getränk, vorzugsweise in einem kohlensäurehaltigen Getränk, wobei das Aromapulver umfasst:
a) ein, zwei, drei oder mehr Komponenten ausgewählt aus der Gruppe bestehend aus Zuckern, Süßungsmitteln, Säureregulatoren, Fließhilfsmitteln, Vitaminen, Mineralstoffen, Kräuterzusätzen, Aminosäuren, Fettsäuren, Ballaststoffen, Lebensmittelfarbstoffen, künstlichen Farbstoffen, Trübungsmitteln, Zuckeralkoholen, Präbiotika, Probiotika, getrockneten Obst- und Gemüsekonzentraten oder -extrakten, Lebensmittelsäuren, vorzugsweise ausgewählt aus der Gruppe bestehend aus Zitronensäure, Weinsäure, Äpfelsäure, Essigsäure, Milchsäure, Glucuronsäure, Ascorbinsäure; und Carbonaten, vorzugsweise ausgewählt aus der Gruppe bestehend aus Natriumhydrogencarbonat, Natriumcarbonat, Magnesiumcarbonat,
b) agglomerierte Aromapartikel,
wobei der D50-Wert der agglomerierten Aromapartikel mindestens 100 µm beträgt,
wobei die agglomerierten Aromapartikel durch ein Verfahren erhalten werden oder erhältlich sind, das die folgenden Schritte umfasst:
(i) Herstellen von Partikeln, die eine oder mehrere aromatische Substanz(en) und einen oder mehrere Trägerstoff(e) umfassen oder aus diesen bestehen, durch Sprühtrocknung in einer Trockenkammer einer Sprühtrocknungsvorrichtung,
(ii) Besprühen der Partikel mit einem oder mehreren Bindemittel(n), ausgewählt aus der Gruppe bestehend aus Einfach- oder Mehrfachzuckern mit reduzierenden Gruppen und Zuckeralkoholen oder Mischungen davon, in einem Wirbelschichtbett, das in die Trockenkammer integriert ist, wobei die Menge des Bindemittels in einem Bereich von 10 bis 30 Vol.-%, vorzugsweise in einem Bereich von 10 bis 20 Vol.-%, bezogen auf die Menge der Sprühemulsion, liegt, die im Sprühtrocknungsschritt zur Herstellung von Partikeln in Schritt (i) versprüht wird,
wobei die Schritte (i) und (ii) gleichzeitig ablaufen und die Partikel in der Trockenkammer ständig in Bewegung gehalten und agglomeriert werden, und
c) eine Zusammensetzung, die die Aromapartikel der agglomerierten Aromapartikel teilweise oder vollständig umgibt, wobei die Zusammensetzung ein, zwei, drei oder mehr oder alle Komponenten ausgewählt aus der Gruppe bestehend aus Triacetin; Polyethylenglykol; pflanzlichen Ölen; Fruchtölen, vorzugsweise Zitrusölen, vorzugsweise Zitronenöl; und unpolaren aromatischen Substanzen umfasst.

2. Aromapulver gemäß Anspruch 1, wobei der Anteil der agglomerierten Aromapartikel im Aromapulver in einem Bereich von 10 bis 40 Gew.-%, vorzugsweise 15 bis 35 Gew.-%, bevorzugt 20 bis 30 Gew.-%, bezogen auf das Gesamtgewicht des Aromapulvers liegt,
und/oder wobei der kombinierte Anteil der agglomerierten Aromapartikel und der Zusammensetzung, die die Aromapartikel der agglomerierten Aromapartikel teilweise oder vollständig in der Zusammensetzung umgibt, in einem Bereich von 10 bis 40 Gew.-%, vorzugsweise 15 bis 35 Gew.-%, bevorzugt 20 bis 30 Gew.-%, bezogen auf das Gesamtgewicht des Aromapulvers liegt.

3. Aromapulver gemäß Anspruch 1 oder 2, wobei der D50-Wert der agglomerierten Aromapartikel in einem Bereich von 100 bis 1000 µm liegt, vorzugsweise im Bereich von 125 bis 900 µm, vorzugsweise im Bereich von 150 bis 800 µm, vorzugsweise im Bereich von 175 bis 750 µm, vorzugsweise im Bereich von 200 bis 700 µm, vorzugsweise im Bereich von 210 bis 675 µm, vorzugsweise im Bereich von 220 bis 650 µm, vorzugsweise im Bereich von 250 bis 600 µm, vorzugsweise im Bereich von 300 bis 500 µm, bevorzugt im Bereich von 325 bis 375 µm.

4. Aromapulver gemäß einem der vorhergehenden Ansprüche, wobei die agglomerierten Aromapartikel einen oder mehrere Geschmacksstoffe und eine oder zwei oder alle Substanzen ausgewählt aus Bindemitteln, Trägerstoffen und Emulgatoren umfassen oder aus diesen bestehen,
vorzugsweise, wobei die agglomerierten Aromapartikel umfassen oder bestehen aus
- 2 bis 35 Gew.-%, vorzugsweise 15 bis 25 Gew.-% eines oder mehrerer Geschmacksstoffe, bezogen auf das Gesamtgewicht der agglomerierten Aromapartikel,
- 65 bis 98 Gew.-% einer oder zweier oder aller Substanzen ausgewählt aus Bindemitteln, Trägerstoffen und Emulgatoren, bezogen auf das Gesamtgewicht der agglomerierten Aromapartikel,
vorzugsweise 1 bis 10 Gew.-% Bindemittel, bezogen auf das Gesamtgewicht der agglomerierten Aromapartikel.

5. Aromapulver gemäß Anspruch 4,
wobei das, ein oder mehrere oder alle Bindemittel ausgewählt ist/sind aus der Gruppe bestehend aus Zuckeralkoholen, insbesondere Mannit, Mono-, Di- und Oligosacchariden mit reduzierenden Gruppen oder Mischungen, die Mono-, Di- und/oder Oligosaccharide mit reduzierenden Gruppen enthalten oder aus diesen bestehen, insbesondere Glucose, Mannose, Galactose, Maltose, Lactose, Cellobiose und Maltodextrin, und Polysacchariden mit reduzierenden Gruppen, vorzugsweise pflanzlichen Gummis, insbesondere Gummi arabicum, Traganth, Gummi Ghatti, Agar, Carrageen, Guarmehl und Karubin, und Mischungen davon,
und/oder
wobei der, ein oder mehrere oder alle Trägerstoffe ausgewählt ist/sind aus der Gruppe bestehend aus Maltodextrinen, Dextrinen, Stärken, Mehlen und Faserstoffen, und Mischungen davon,
und/oder
wobei der, ein oder mehrere oder alle Emulgatoren ausgewählt ist/sind aus der Gruppe bestehend aus Gummi arabicum, modifizierten Stärken, Proteinen, insbesondere pflanzlichen Proteinen, nativen oder modifizierten Pektinen und löslichen Fraktionen von Sojapolysacchariden sowie Mischungen davon.

6. Verfahren zur Herstellung eines Aromapulvers, vorzugsweise eines Aromapulvers gemäß einem der vorhergehenden Ansprüche, wobei das Verfahren die Schritte umfasst:
i) Bereitstellen von ein, zwei, drei oder mehr Komponenten ausgewählt aus der Gruppe bestehend aus Zuckern, Süßungsmitteln, Säureregulatoren, Fließhilfsmitteln, Vitaminen; Mineralstoffen; Kräuterzusätzen, Aminosäuren; Fettsäuren; Ballaststoffen; Lebensmittelfarbstoffen; künstlichen Farbstoffen; Trübungsmitteln; Zuckeralkoholen; Präbiotika; Probiotika; getrockneten Obst- und Gemüsekonzentraten oder -extrakten; Lebensmittelsäuren, vorzugsweise ausgewählt aus der Gruppe bestehend aus Zitronensäure, Weinsäure, Äpfelsäure, Essigsäure, Milchsäure, Glucuronsäure, Ascorbinsäure; und Carbonaten, vorzugsweise ausgewählt aus der Gruppe bestehend aus Natriumhydrogencarbonat, Natriumcarbonat, Magnesiumcarbonat,
und Mischen der bereitgestellten Komponenten, bis eine homogene Basismischung erhalten wird,
ii) Bereitstellen von agglomerierten Aromapartikeln, wobei der D50-Wert der agglomerierten Aromapartikel in einem Bereich von 100 bis 1000 µm liegt, vorzugsweise im Bereich von 125 bis 900 µm, vorzugsweise im Bereich von 150 bis 800 µm, vorzugsweise im Bereich von 175 bis 750 µm, vorzugsweise im Bereich von 200 bis 700 µm, vorzugsweise im Bereich von 210 bis 675 µm, vorzugsweise in einem Bereich von 220 bis 650 µm, vorzugsweise im Bereich von 250 bis 600 µm, vorzugsweise im Bereich von 300 bis 500 µm, bevorzugt im Bereich von 325 bis 375 µm,
iii) Hinzufügen der in Schritt ii) bereitgestellten agglomerierten Aromapartikel zu der in Schritt i) erhaltenen homogenen Basismischung und Mischen der Zusammensetzung, bis eine homogene Aromamischung erhalten wird,
iv) Bereitstellen einer Zusammensetzung, die eine, zwei, drei oder mehr oder alle Verbindungen ausgewählt aus der Gruppe bestehend aus Triacetin; Polyethylenglykol; pflanzlichen Ölen; Fruchtölen, vorzugsweise Zitrusölen, vorzugsweise Zitronenöl; und unpolaren aromatischen Substanzen umfasst, optional wobei die flüssige Zusammensetzung ferner einen oder mehrere Aromastoff(e) umfasst.
v) Injizieren der in Schritt iv) bereitgestellten flüssigen Zusammensetzung in die in Schritt iii) erhaltene Aromamischung und Mischen der erhaltenen Zusammensetzung, um eine weitere Agglomeration der Aromapartikel zu bewirken
oder
Durchführen weiterer Agglomeration der Aromapartikel durch Sprühagglomeration, vorzugsweise Wirbelschicht-Sprühagglomeration, wobei die in Schritt iv) bereitgestellte flüssige Zusammensetzung auf die in Schritt iii) erhaltene Aromamischung, vorzugsweise die in Schritt iii) erhaltenen agglomerierten Aromapartikel, gesprüht wird, vorzugsweise wobei die Sprühagglomeration ferner einen Trocknungsschritt umfasst.

7. Verfahren gemäß Anspruch 6, wobei in Schritt ii) die agglomerierten Aromapartikel durch ein Verfahren bereitgestellt werden, das die Schritte umfasst:
(ii.a) Herstellen von Partikeln, die eine oder mehrere aromatische Substanz(en) und einen oder mehrere Trägerstoff(e) umfassen oder aus diesen bestehen, durch Sprühtrocknung in einer Trockenkammer einer Sprühtrocknungsvorrichtung
(ii.b) Besprühen der Partikel mit einem oder mehreren Bindemittel(n), ausgewählt aus der Gruppe bestehend aus Einfach- oder Mehrfachzuckern mit reduzierenden Gruppen und Zuckeralkoholen oder Mischungen davon, in einem Wirbelschichtbett, das in die Trockenkammer integriert ist, wobei das oder die Bindemittel insgesamt in einer Konzentration von 10 bis 30 Vol.-%, vorzugsweise 10 bis 20 Vol.-%, in wässriger Lösung eingesetzt wird/werden,
wobei die Schritte (ii.a) und (ii.b) gleichzeitig ablaufen und die Partikel in der Trockenkammer ständig in Bewegung gehalten und agglomeriert werden, und
vorzugsweise, wobei die wässrige Lösung des/der Bindemittel(s) keine Geschmacksstoffe und/oder Duftstoffe enthält.

8. Aromapulver, vorzugsweise ein Aromapulver gemäß einem der Ansprüche 1 bis 5, erhältlich oder erhalten durch ein Verfahren gemäß einem der Ansprüche 6 oder 7,
wobei vorzugsweise der D50-Wert der agglomerierten Aromapartikel mindestens 100 µm beträgt.

9. Aromapulver gemäß Anspruch 8, wobei der D50-Wert der agglomerierten Aromapartikel in einem Bereich von 100 bis 1000 µm liegt, vorzugsweise im Bereich von 125 bis 900 µm, vorzugsweise im Bereich von 150 bis 800 µm, vorzugsweise im Bereich von 175 bis 750 µm, vorzugsweise im Bereich von 200 bis 700 µm, vorzugsweise im Bereich von 210 bis 675 µm, vorzugsweise im Bereich von 220 bis 650 µm, vorzugsweise im Bereich von 250 bis 600 µm, vorzugsweise im Bereich von 300 bis 500 µm, bevorzugt im Bereich von 325 bis 375 µm.

10. Aromapulver gemäß Anspruch 8 oder 9, wobei der Anteil der agglomerierten Aromapartikel im Aromapulver in einem Bereich von 10 bis 40 Gew.-%, vorzugsweise 15 bis 35 Gew.-%, bevorzugt 20 bis 30 Gew.-%, bezogen auf das Gesamtgewicht des Aromapulvers liegt,
und/oder wobei der kombinierte Anteil der agglomerierten Aromapartikel und der Zusammensetzung, die die Aromapartikel der agglomerierten Aromapartikel teilweise oder vollständig in der Zusammensetzung umgibt, in einem Bereich von 10 bis 40 Gew.-%, vorzugsweise 15 bis 35 Gew.-%, bevorzugt 20 bis 30 Gew.-%, bezogen auf das Gesamtgewicht des Aromapulvers liegt.

11. Verfahren zum Vermitteln, Modifizieren und/oder Verstärken eines Geschmacks in einem Getränk, vorzugsweise einem kohlensäurehaltigen Getränk,
wobei das Verfahren die Schritte umfasst:
i) Bereitstellen von Wasser, vorzugsweise kohlensäurehaltigem Wasser,
ii) Bereitstellen eines Aromapulvers gemäß einem der Ansprüche 1 bis 5 oder 8 bis 10,
iii) Hinzufügen des in Schritt ii) bereitgestellten Aromapulvers zu dem in Schritt i) bereitgestellten Wasser.

12. Verfahren gemäß Anspruch 11, wobei das in Schritt iii) hinzugefügte Aromapulver in einem Bereich von 0,05 bis 25 g/L, vorzugsweise 0,1 bis 20 g/L, vorzugsweise 0,25 bis 15 g/L, vorzugsweise 0,5 bis 12,5 g/L, bevorzugt 1 bis 10 g/L liegt, bezogen auf das in Schritt i) bereitgestellte Wasser, vorzugsweise kohlensäurehaltiges Wasser.

13. Verwendung eines Aromapulvers gemäß einem der Ansprüche 1 bis 5 oder 8 bis 10 zum Vermitteln, Modifizieren und/oder Verstärken eines Geschmacks in einem Getränk, vorzugsweise einem kohlensäurehaltigen Getränk.

14. Verwendung gemäß Anspruch 13, wobei die Verwendung das Hinzufügen von Aromapulver in einem Bereich von 0,05 bis 25 g/L, vorzugsweise 0,1 bis 20 g/L, vorzugsweise 0,25 bis 15 g/L, vorzugsweise 0,5 bis 12,5 g/L, bevorzugt 1 bis 10 g/L, bezogen auf das Wasser, vorzugsweise kohlensäurehaltiges Wasser, zu dem Wasser, vorzugsweise kohlensäurehaltigem Wasser, umfasst.

## Revendications

1. Poudre aromatique destinée à conférer, modifier et/ou renforcer une saveur dans une boisson, de préférence dans une boisson gazeuse, ladite poudre aromatique comprenant:
a) un, deux, trois composants ou plus choisis dans le groupe constitué par les sucres, les édulcorants, les régulateurs d'acidité, les additifs d'écoulement, les vitamines, les minéraux, les compléments à base de plantes, les acides aminés, les acides gras, les fibres, les colorants alimentaires, les colorants artificiels, les agents de turbidité, les alcools de sucre, les prébiotiques, les probiotiques, les concentrés ou extraits séchés de fruits et de légumes, les acides alimentaires, de préférence choisis dans le groupe constitué par l'acide citrique, l'acide tartrique, l'acide malique, l'acide acétique, l'acide lactique, l'acide glucuronique, l'acide ascorbique, ainsi que les carbonates, de préférence choisis dans le groupe constitué par le bicarbonate de sodium, le carbonate de sodium, le carbonate de magnésium,
b) des particules aromatiques agglomérées,
dans laquelle le d50 des particules aromatiques agglomérées est d'au moins 100 µm,
dans laquelle les particules aromatiques agglomérées sont obtenues ou susceptibles d'être obtenues par un procédé comprenant les étapes consistant à
(i) produire des particules comprenant ou constituées d'une ou de plusieurs substance(s) aromatique(s) et d'un ou de plusieurs support(s), par séchage par pulvérisation dans une chambre de séchage d'un dispositif de séchage par pulvérisation,
(ii) pulvériser sur lesdites particules un ou plusieurs liant(s) choisi(s) dans le groupe constitué par les sucres simples ou multiples comprenant des groupes réducteurs et les alcools de sucre ou leurs mélanges, dans un lit fluidisé qui est intégré à la chambre de séchage, dans laquelle la quantité de liant est comprise dans une plage allant de 10 à 30 % en volume, de préférence dans une plage allant de 10 à 20 % en volume, par rapport à la quantité de l'émulsion de pulvérisation qui est pulvérisée lors de l'étape de séchage par pulvérisation pour produire des particules à l'étape (i),
dans laquelle les étapes (i) et (ii) ont lieu simultanément et les particules sont maintenues en mouvement de manière permanente et agglomérées au sein de la chambre de séchage, et
c) une composition entourant partiellement ou totalement les particules aromatiques des particules aromatiques agglomérées, ladite composition comprenant un, deux, trois composants ou plus ou la totalité des composants choisis dans le groupe constitué par la triacétine, le polyéthylène glycol, les huiles végétales, les huiles de fruits, de préférence les huiles d'agrumes, de préférence l'huile de citron, et les substances aromatiques non polaires.

2. Poudre aromatique selon la revendication 1, dans laquelle la quantité de particules aromatiques agglomérées dans la poudre aromatique est comprise dans une plage allant de 10 à 40 % en poids, de préférence de 15 à 35 % en poids, de préférence de 20 à 30 % en poids, par rapport au poids total de la poudre aromatique,
et/ou dans laquelle la quantité combinée des particules aromatiques agglomérées et de la composition entourant partiellement ou complètement les particules aromatiques des particules aromatiques agglomérées dans la composition est comprise dans une plage allant de 10 à 40 % en poids, de préférence de 15 à 35 % en poids, de préférence de 20 à 30 % en poids, par rapport au poids total de la poudre aromatique.

3. Poudre aromatique selon la revendication 1 ou 2, dans laquelle le d50 des particules aromatiques agglomérées est compris dans une plage allant de 100 à 1000 µm, de préférence dans la plage allant de 125 à 900 µm, de préférence dans la plage allant de 150 à 800 µm, de préférence dans la plage allant de 175 à 750 µm, de préférence dans la plage allant de 200 à 700 µm, de préférence dans la plage allant de 210 à 675 µm, de préférence dans la plage allant de 220 à 650 µm, **de** préférence dans la plage allant de 250 à 600 µm, de préférence dans la plage allant de 300 à 500 µm, de préférence dans la plage allant de 325 à 375 µm.

4. Poudre aromatique selon l'une quelconque des revendications précédentes, dans laquelle les particules aromatiques agglomérées comprennent ou sont constituées d'un ou de plusieurs agent(s) aromatisant(s) et d'une ou de deux ou de la totalité des substances choisies parmi les liants, les supports et les émulsifiants,
de préférence dans laquelle les particules aromatiques agglomérées comprennent ou sont constituées de,
- 2 à 35 % en poids, de préférence 15 à 25 % en poids, d'un ou de plusieurs agent(s) aromatisant(s), par rapport au poids total des particules aromatiques agglomérées,
- 65 à 98 % en poids d'une ou de deux ou de la totalité des substances choisies parmi les liants, les supports et les émulsifiants, par rapport au poids total des particules aromatiques agglomérées,
de préférence 1 à 10 % en poids de liants, par rapport au poids total des particules aromatiques agglomérées.

5. Poudre aromatique selon la revendication 4,
dans laquelle le, un ou plusieurs liant(s) ou tous les liants est/sont choisi(s) dans le groupe constitué par les alcools de sucre, en particulier le mannitol ; les mono-, di- et oligosaccharides à groupes réducteurs ou les mélanges contenant ou constitués de mono-, di- et/ou oligosaccharides à groupes réducteurs, en particulier le glucose, le mannose, le galactose, le maltose, le lactose, le cellobiose et la maltodex- trine, et les polysaccharides à groupes réducteurs, de préférence les gommes végétales, en particulier la gomme arabique, la gomme adragante, la gomme ghatti, l'agar-agar, les carraghénanes, la farine de guar et la caroubine, ainsi que leurs mélanges,
et/ou
dans laquelle le, un ou plusieurs ou tous les support(s) est/sont choisi(s) dans le groupe constitué par les maltodextrines, les dextrines, les amidons, les farines et les matériaux fibreux, ainsi que leurs mélanges,
et/ou
dans laquelle le, un ou plusieurs émulsifiant(s) ou tous les émulsifiants est/sont choisi(s) dans le groupe constitué par la gomme arabique, les amidons modifiés, les protéines, en particulier les protéines végétales, les pectines natives ou modifiées et les fractions solubles de polysaccharides de soja, ainsi que leurs mélanges.

6. Procédé de production d'une poudre aromatique, de préférence d'une poudre aromatique selon l'une quelconque des revendications précédentes, le procédé comprenant les étapes consistant à:
i) fournir un, deux, trois composants ou plus choisis dans le groupe constitué par les sucres, les édulcorants, les régulateurs d'acidité, les agents d'écoulement, les vitamines, les minéraux, les compléments à base de plantes, les acides aminés, les acides gras, les fibres, les colorants alimentaires, les colorants artificiels, les agents de turbidité, les alcools de sucre, les prébiotiques, les probiotiques, les concentrés ou extraits séchés de fruits et de légumes, les acides alimentaires, de préférence choisis dans le groupe constitué par l'acide citrique, l'acide tartrique, l'acide malique, l'acide acétique, l'acide lactique, l'acide glucuronique, l'acide ascorbique, ainsi que les carbonates, de préférence choisis dans le groupe constitué par le bicarbonate de sodium, le carbonate de sodium, le carbonate de magnésium,
et mélanger les composants fournis jusqu'à l'obtention d'un mélange de base homogène,
ii) fournir des particules aromatiques agglomérées, dans lequel le d50 des particules aromatiques agglomérées est compris dans une plage allant de 100 à 1000 µm, de préférence dans la plage allant de 125 à 900 µm, de préférence dans la plage allant de 150 à 800 µm, de préférence dans la plage allant de 175 à 750 µm, de préférence dans la plage allant de 200 à 700 µm, de préférence dans la plage allant de 210 à 675 µm, de préférence dans la plage allant de 220 à 650 µm, de préférence dans la plage allant de 250 à 600 µm, de préférence dans la plage allant de 300 à 500 µm, de préférence dans la plage allant de 325 à 375 µm,
iii) ajouter les particules aromatiques agglomérées fournies à l'étape ii), au mélange de base homogène obtenu à l'étape i), et mélanger la composition jusqu'à l'obtention d'un mélange aromatique homogène,
iv) fournir une composition comprenant un, deux, trois composés ou plus, ou la totalité des composés choisis dans le groupe constitué par la triacétine ; le polyéthylène glycol ; les huiles végétales ; les huiles de fruits, de préférence les huiles d'agrumes, de préférence l'huile de citron ; et les substances aromatiques non polaires,
en option, dans lequel la composition liquide comprend en outre une ou plusieurs substance(s) aromatique(s),
v) injecter la composition liquide fournie à l'étape iv) dans le mélange aromatique obtenu à l'étape iii), et mélanger la composition obtenue afin de provoquer une agglomération supplémentaire des particules aromatiques,
ou
mettre en oeuvre une agglomération supplémentaire des particules aromatique par agglomération par pulvérisation, de préférence une agglomération par pulvérisation en lit fluidisé, dans lequel la composition liquide fournie à l'étape iv) est pulvérisée sur le mélange aromatique obtenu à l'étape iii), de préférence sur les particules aromatiques agglomérées obtenues à l'étape iii), de préférence dans lequel l'agglomération par pulvérisation comprend en outre une étape de séchage.

7. Procédé selon la revendication 6, dans lequel, à l'étape ii), les particules aromatiques agglomérées sont fournies par un procédé comprenant les étapes consistant à:
(ii.a) produire des particules comprenant ou constituées d'une ou de plusieurs substance(s) aromatique(s) et d'un ou de plusieurs supports par séchage par pulvérisation dans une chambre de séchage d'un dispositif de séchage par pulvérisation,
(ii.b) pulvériser sur les particules un ou plusieurs liant(s) choisi(s) dans le groupe constitué par les sucres simples ou multiples à groupes réducteurs et les alcools de sucre, ou leurs mélanges, dans un lit fluidisé qui est intégré à la chambre de séchage, dans lequel le/les liant(s) est/sont utilisé(s) au total à une concentration de 10 à 30 % en volume, de préférence de 10 à 20 % en volume, en solution aqueuse,
dans lequel les étapes (ii.a) et (ii.b) ont lieu simultanément et les particules sont maintenues en mouvement de manière permanente et agglomérées au sein de la chambre de séchage, et
de préférence dans lequel la solution aqueuse du/des liant(s) ne contient aucun agent aromatisant et/ou odorant.

8. Poudre aromatique, de préférence une poudre aromatique selon l'une quelconque des revendications 1 à 5, susceptible d'être obtenue ou obtenue par un procédé selon l'une quelconque des revendications 6 ou 7,
de préférence dans laquelle le d50 des particules aromatiques agglomérées est d'au moins 100 µm.

9. Poudre aromatique selon la revendication 8, dans laquelle le d50 des particules aromatiques agglomérées est compris dans une plage allant de 100 à 1000 µm, de préférence dans la plage allant de 125 à 900 µm, de préférence dans la plage allant de 150 à 800 µm, de préférence dans la plage allant de 175 à 750 µm, de préférence dans la plage allant de 200 à 700 µm, de préférence dans la plage allant de 210 à 675 µm, de préférence dans la plage allant de 220 à 650 µm, de préférence dans la plage allant de 250 à 600 µm, de préférence dans la plage allant de 300 à 500 µm, de préférence dans la plage allant de 325 à 375 µm.

10. Poudre aromatique selon la revendication 8 ou 9, dans laquelle la quantité de particules aromatiques agglomérées dans la poudre aromatique est comprise dans une plage allant de 10 à 40 % en poids, de préférence de 15 à 35 % en poids, de préférence de 20 à 30 % en poids, par rapport au poids total de la poudre aromatique,
et/ou dans laquelle la quantité combinée des particules aromatiques agglomérées et de la composition entourant partiellement ou complètement les particules aromatiques des particules aromatiques agglomérées dans la composition se situe dans une plage allant de 10 à 40 % en poids, de préférence de 15 à 35 % en poids, de préférence de 20 à 30 % en poids, par rapport au poids total de la poudre aromatique.

11. Procédé destiné à conférer, modifier et/ou renforcer une saveur dans une boisson, de préférence une boisson gazeuse,
le procédé comprenant les étapes consistant à:
i) fournir de l'eau, de préférence de l'eau gazeuse,
ii) fournir une poudre aromatique selon l'une quelconque des revendications 1 à 5 ou 8 à 10,
iii) ajouter la poudre aromatique fournie à l'étape ii), à l'eau fournie à l'étape i).

12. Procédé selon la revendication 11, dans lequel la poudre aromatique ajoutée à l'étape iii) se situe dans une plage allant de 0,05 à 25 g/L, de préférence de 0,1 à 20 g/L, de préférence de 0,25 à 15 g/L, de préférence de 0,5 à 12,5 g/L, de préférence de 1 à 10 g/L, par rapport à l'eau, de préférence l'eau gazeuse, fournie à l'étape i).

13. Utilisation d'une poudre aromatique selon l'une quelconque des revendications 1 à 5 ou 8 à 10 pour conférer, modifier et/ou renforcer une saveur dans une boisson, de préférence une boisson gazeuse.

14. Utilisation selon la revendication 13, dans laquelle l'utilisation comprend l'ajout d'une poudre aromatique, dans une plage allant de 0,05 à 25 g/L, de préférence de 0,1 à 20 g/L, de préférence de 0,25 à 15 g/L, de préférence de 0,5 à 12,5 g/L, de préférence de 1 à 10 g/L, par rapport à l'eau, de préférence l'eau gazeuse, à l'eau, de préférence l'eau gazeuse.
